# EUROPEAN PATENT APPLICATION

(11) **EP 4 838 663 A1**
(43) Date of publication of application: **11.11.2026**
(21) Application number: 24920000.7
(22) Date of filing: 26.12.2024
(51) Int. Cl.: H01M 50/264, H01M 50/242

(54) **ENERGY STORAGE DEVICE AND ENERGY STORAGE SYSTEM**

(30) Priority: 26.01.2024 CN 202410118472; 20.09.2024 CN 202411319999; 20.11.2024 CN 202411672949; 20.12.2024 CN 202423177126 U; 20.12.2024 CN 202423177187 U
(71) Applicant: Shenzhen Hithium Hero Energy Equity Technology Co., Ltd, Shenzhen, Guangdong 518110 (CN); Xiamen Hithium Energy Storage Technology Co., Ltd., Xiamen, Fujian 361100 (CN)
(72) Inventor: GUAN, Wei, Shenzhen, Guangdong 518110 (CN); GU, Tianhao, Shenzhen, Guangdong 518110 (CN)
(74) Representative: Manitz Finsterwald Patent- und Rechtsanwaltspartnerschaft mbB
(86) International application number: PCT/CN2024/142557
(87) International publication number: WO 2025/156922

(57) **Abstract**

Provided are an energy storage device and an energy storage system. The energy storage device includes a housing, a clamping member, a battery and an adjustment member. The clamping member is disposed inside the housing. The clamping member includes a first clamping part and a second clamping part connected to the first clamping part, and a clamping space is formed between the first clamping part and the second clamping part. The battery is disposed in the clamping space. The adjustment member is located in the housing. The first clamping part and the second clamping part are connected to each other through the adjustment member, and the adjustment member is configured to adjust a size of the clamping space to adjust a clamping degree of the first clamping part and the second clamping part on the battery.

## Description

### CROSS-REFERENCE TO RELATED APPLICATIONS

This application claims priorities to Chinese patent application No. 2024101184720, titled "ENERGY STORAGE DEVICE AND ENERGY STORAGE SYSTEM", filed with China National Intellectual Property Administration on January 26, 2024, Chinese patent application No. 2024113199996, titled "ENERGY STORAGE DEVICE AND ENERGY STORAGE SYSTEM", filed with China National Intellectual Property Administration on September 20, 2024, Chinese patent application No. 2024116729496, titled "ENERGY STORAGE DEVICE AND ENERGY STORAGE SYSTEM", filed with China National Intellectual Property Administration on November 20, 2024, and Chinese patent application No. 2024231771870 titled "HOUSING ASSEMBLY, ENERGY STORAGE DEVICE AND ENERGY STORAGE SYSTEM" and Chinese patent application No. 2024231771264 titled "MOBILE ENERGY STORAGE DEVICE AND HOUSING ASSEMBLY THEREOF, AND ENERGY STORAGE SYSTEM", both filed with China National Intellectual Property Administration on December 20, 2024, the entire contents of which are incorporated herein by reference.

### FIELD

The present disclosure relates to the field of energy storage technologies, and more particularly, to an energy storage device and an energy storage system.

### BACKGROUND

In the related art, an energy storage device typically includes a plurality of battery cells connected in series. Since the battery cell may expand during charging and discharging, which not only squeezes other battery cells inside the energy storage device, causing damage to a basic framework of the energy storage device, affecting service life of the energy storage device and even causing safety accidents, but also degrades performance of the battery cell itself, increasing safety hazards and reducing operational performance of the energy storage device.

### SUMMARY

An embodiment of the present disclose provides an energy storage device and an energy storage system, which can effectively prevent expansion of a battery, thereby avoiding various battery performance and safety issues caused by the expansion of the battery.

To achieve the above objectives, a first aspect of the present disclosure provides an energy storage device. The energy storage device includes: a housing; a clamping member disposed inside the housing, the clamping member including a first clamping part and a second clamping part connected to the first clamping part, and a clamping space being formed between the first clamping part and the second clamping part; a battery disposed in the clamping space; and an adjustment member located inside the housing, the first clamping part and the second clamping part being connected to each other through the adjustment member, and the adjustment member being configured to adjust a size of the clamping space to adjust a clamping degree of the first clamping part and the second clamping part on the battery.

A second aspect of the present disclosure provides an energy storage system having the energy storage device according to the above first aspect.

Compared with the related art, the present disclosure at least provides the following advantageous effects.

With the energy storage device and the energy storage system according to the present disclosure, by providing a clamping member including the first clamping part and the second clamping part, and adopting the adjustment member to connect the first clamping part to the second clamping part, the size of the clamping space formed by the first clamping part and the second clamping part for placing the battery can be changed, in such a manner that not only the first clamping part and the second clamping part can be used to clamp the battery, but also the first clamping part and the second clamping part can be allowed to adapt to a size of the battery. By adjusting a clamping degree of the first clamping part and the second clamping part on the battery, the clamping force applied to the battery by the first clamping part and the second clamping part can be regulated. In this way, expansion of the battery can be mitigated and even the battery can be prevented from expanding, ensuring operational performance of the battery, prolonging service life of the battery, and thus reducing a safety hazard.

In addition, since the size of the clamping space in the present disclosure is adjustable and can be adapted to the size of the battery, the first clamping part and the second clamping part can clamp batteries of different sizes without preparing a plurality of clamping members having different sizes of clamping spaces to adapt to the size of the battery, facilitating cost reduction.

### BRIEF DESCRIPTION OF THE DRAWINGS

To more clearly explain technical solutions according to the embodiments of the present disclosure, accompanying drawings required to be used in the description of the embodiments are briefly described below. Obviously, the accompanying drawings in the following descriptions are only some embodiments of the present disclosure. For those skilled in the art, other accompanying drawings can be obtained from these accompanying drawings without creative labor.
FIG. 1 is a schematic structural view of an energy storage device according to an embodiment of the present disclosure.
FIG. 2 is an exploded schematic view of a structure of an energy storage device according to an embodiment of the present disclosure.
FIG. 3 is a schematic view of a first structure of a clamping member according to an embodiment of the present disclosure.
FIG. 4 is an exploded schematic structural view of the clamping member in FIG. 3.
FIG. 5 is a schematic view of a first structure of a second clamping part according to an embodiment of the present disclosure.
FIG. 6 is a schematic structural view of a clamping member and a battery according to an embodiment of the present disclosure.
FIG. 7 is a schematic view of a second structure of a clamping member according to an embodiment of the present disclosure.
FIG. 8 is an exploded schematic structural view of the clamping member in FIG. 7.
FIG. 9 is a schematic view of a second structure of a second clamping part according to an embodiment of the present disclosure.
FIG. 10 is a schematic structural view of a first clamping part according to an embodiment of the present disclosure.
FIG. 11 is a schematic structural view of a bottom shell according to an embodiment of the present disclosure.
FIG. 12 is a schematic structural view of a battery, a clamping member, a motherboard mounting member, and a circuit board according to an embodiment of the present disclosure.
FIG. 13 is an exploded schematic structural view of FIG. 12.
FIG. 14 is a schematic structural view of a circuit board according to an embodiment of the present disclosure.
FIG. 15 is a schematic structural view of a motherboard mounting member according to an embodiment of the present disclosure.
FIG. 16 is a schematic structural view of a motherboard mounting member according to an embodiment of the present disclosure, viewed from another perspective.
FIG. 17 is a sectional view of an energy storage device taken along line M-M in FIG. 1 according to an embodiment of the present disclosure.
FIG. 18 is a schematic structural view of a bottom shell viewed from another perspective according to an embodiment of the present disclosure.
FIG. 19 is a schematic perspective view of a structure of a housing assembly according to an embodiment of the present disclosure.
FIG. 20 is a sectional view of a housing assembly taken along line N-N in FIG. 19 according to an embodiment of the present disclosure.
FIG. 21 is a schematic structural view of a grip member according to an embodiment of the present disclosure.
FIG. 22 is a side view of a housing assembly according to an embodiment of the present disclosure.
FIG. 23 is a schematic perspective view of a structure of a housing assembly viewed from another perspective according to an embodiment of the present disclosure.
FIG. 24 is a schematic perspective view of a structure of a housing assembly viewed from yet another perspective according to an embodiment of the present disclosure.
FIG. 25 is a schematic perspective view of a structure of an energy storage device not illustrating a bottom shell according to an embodiment of the present disclosure.
FIG. 26 is a simplified view of a first structure of a housing assembly taken along line A-A in FIG. 24 according to an embodiment of the present disclosure.
FIG. 27 is a simplified view of a second structure of a housing assembly taken along line A-A in FIG. 24 according to an embodiment of the present disclosure.
FIG. 28 is a simplified view of a third structure of a housing assembly taken along line A-A in FIG. 24 according to an embodiment of the present disclosure.
FIG. 29 is a simplified view of a fourth structure of a housing assembly taken along line A-A in FIG. 24 according to an embodiment of the present disclosure.
FIG. 30 is a simplified view of a fifth structure of a housing assembly taken along line A-A in FIG. 24 according to an embodiment of the present disclosure.
FIG. 31 is a schematic structural view of an intermediate shell and a seal according to an embodiment of the present disclosure.
FIG. 32 is a schematic structural view of an intermediate shell according to an embodiment of the present disclosure.
FIG. 33 is a schematic structural view of an intermediate shell viewed from another perspective according to an embodiment of the present disclosure.
FIG. 34 is a schematic structural view of a bottom shell viewed from yet another perspective according to an embodiment of the present disclosure.
FIG. 35 is a schematic structural view of a top shell according to an embodiment of the present disclosure.

Description of reference numerals of the accompanying drawings:
100-energy storage device;
100a-housing assembly; 1-housing; 1a-first gap; 1b-second gap; 1c-third gap; 11-top shell; 111-second vent; 111a-waterproof breathable membrane; 112-first groove; 1121-groove wall surface; 113-annular protrusion; 114-power socket; 115-second functional component; 116-anti-misassembly protrusion; 117-through-hole; 12-intermediate housing; 121-stop protrusion; 1211 first stop surface; 1211a-second groove; 1212-second stop surface; 122-second step structure; 1221-first step surface; 1222-second step surface; 1223-locking protrusion; 123-insertion block; 123a-first insertion block; 123b-second insertion block; 123b1-first insertion plate; 123b2-second insertion plate; 124-anti-misassembly groove; 125-air hole; 126-mounting through hole; 127 avoidance groove; 128-second mounting hole; 129-fourth mounting hole; 129a-second reinforcing rib; 13-bottom shell; 13a-first side wall; 13b second side wall; 131-first side rib; 1311-first guide surface; 132-stop plate; 133-second side rib; 1331-second guide surface; 134-bottom rib; 135-partition; 1351-first side surface; 1352-inclined surface; 136-limit protrusion; 137-lug; 1371-insertion groove;
2-clamping member; 21-first clamping part; 211-first clamping body; 2111-connecting surface; 212-first flange; 2121-first connection hole; 2122-first avoidance hole; 2122a-hole wall surface; 213-protruding column; 2131-first threaded connection hole; 214-protruding bar; 215-second bending part; 216-first mounting flange; 2161-first mounting hole; 22-second clamping part; 221-second clamping body; 222-second flange; 2221 threaded hole; 2222-second connection hole; 2223 second avoidance hole; 223-second mounting flange; 2231-third mounting hole; 23-clamping space; 24-first reinforcing rib; 25-second reinforcing rib; 26-first protrusion;
3-battery; 31 explosion-proof valve;
4-adjustment member; 41-first slot; 42-first bending part; 42a-bent portion; 43-threaded component; 43a-threaded rod; 43b-head; 43c-slot; 44-nut;
5-strap;
6-motherboard mounting member; 61-sleeve structure; 611-first reinforcing rib; 62-second through hole; 63a-engagement groove; 63b-fourth connection hole; 64-first step structure; 65-wiring groove; 651-separating protrusion; 652-wiring sub-groove; 66-first vent; 67-heat dissipation hole; 67a-first sub-heat dissipation hole; 67b-second sub-heat dissipation hole; 67c-third sub-heat dissipation hole;
7-circuit board; 71a-first through hole; 71b-third connection hole; 72-fan; 73-electronic component; 731-first functional component; 74-first conductive protrusion; 75-second conductive protrusion;
7a-heat dissipation fin;
8-heat insulating member; 81-second slot;
9-grip member; 91-peripheral side surface; 92-first rib; 93-second rib; 94-mounting post; 941-second threaded connection hole;
9a-seal;
9b-electrical connection member.

### DETAILED DESCRIPTION

To make purposes, technical solutions, and advantages of the present disclosure more clear, the present disclosure will be further described in detail below with reference to the accompanying drawings and embodiments. It should be understood that the specific embodiments described herein are merely for illustration of the present disclosure, and are not intended to limit the present disclosure.

Unless otherwise defined, all technical and scientific terms used herein have the same meaning as commonly understood by those skilled in the art of the present disclosure. Terms in the present disclosure herein are only used for the purpose of describing embodiments of the present disclosure, and are not intended to limit the present disclosure.

It should be understood that the terms "first", "second", or the like as used herein may be used herein to describe various elements, but these elements are not limited by these terms. These terms are used only to distinguish a first element from another element. For example, without departing from the scope of the present disclosure, the first clamping part may be referred to as a second clamping part. Similarly, the second clamping part may be referred to as a first clamping part. Both the first clamping part and the second clamping part are clamping parts, but not the same clamping part.

It should be understood that "connection" in the following embodiments should be understood as "electrical connection", "communication connection", or the like when the connected circuits, modules, units, or the like have electrical signals or data transmission between one another.

As used herein, singular forms such as "a", "one", and "the" may also include plural forms unless the context clearly dictates otherwise. It should also be understood that the terms "include", "have", or the like specify presence of the stated features, integers, steps, operations, components, portions, or combinations thereof, but do not exclude a possibility of presence or addition of one or more other features, integers, steps, operations, components, portions, or combinations thereof. The term "and/or" as used herein includes any and all combinations of one or more related listed items.

An energy storage device in the related art typically includes a plurality of batteries connected in series. Setting of the plurality of batteries can make a cost of the energy storage device higher. In addition, in the related art, only cable ties are used to bundle the plurality of batteries together to facilitate assembly of the plurality of batteries into a box. However, due to expansion of the battery during charging and discharging, not only other batteries inside the energy storage device can be squeezed, causing damage to a basic framework of the energy storage device, affecting service life of the energy storage device, and even causing safety accidents, but also performance of the battery itself may be degraded, increasing safety hazards and reducing operational performance of the energy storage device.

In view of the above, the embodiments of the present disclosure provide an energy storage device that can effectively prevent the expansion of the battery. In the energy storage device, when the battery is charged and discharged, the battery can be clamped by the first clamping part and the second clamping part to slow down a degree of expansion of the battery and even prevent the battery from expanding, ensuring performance of the battery. On this basis, in the present disclosure, the adjustment member is further used to connect the first clamping part and the second clamping part. In this way, the size of the clamping space can be adjusted through the adjustment member to adjust the clamping degree of the first clamping part and the second clamping part on the battery, and thus the clamping force applied by the first clamping part and the second clamping part on the battery can be adjusted to slow down a degree of expansion of the battery and even prevent the battery from expanding. Furthermore, the operational performance of the battery can be ensured, prolonging the service life and reducing the safety hazards.

### First Embodiment

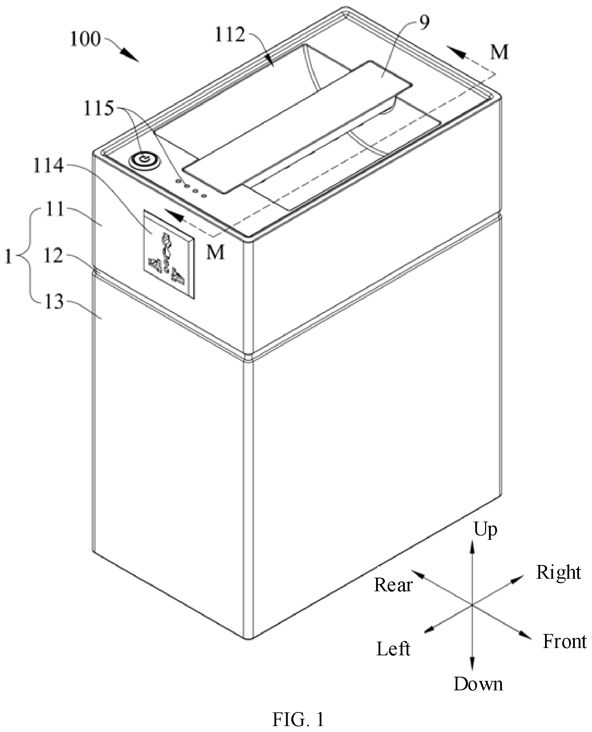

As illustrated in FIG. 1 to FIG. 3, the first embodiment of the present disclosure discloses an energy storage device. The energy storage device 100 includes a housing 1, a clamping member 2, a battery 3 and an adjustment member 4. The clamping member 2 is disposed inside the housing 1. The clamping member 2 includes a first clamping part 21 and a second clamping part 22 connected to the first clamping part 21. A clamping space 23 is formed between the first clamping part 21 and the second clamping part 22. The battery 3 is disposed in the clamping space 23. The adjustment member 4 is located inside the housing 1. The first clamping part 21 and the second clamping part 22 are connected to each other through the adjustment member 4. The adjustment member 4 is configured to adjust a size of the clamping space 23 to adjust a clamping degree of the first clamping part 21 and the second clamping part 22 on the battery 3. In this way, the situation where the clamping space 23 is too large to press the battery 3 tightly can be avoided. That the battery 3 is pressed against by the first clamping part 21 and/or the second clamping part 22 during charging and discharging of the battery 3 can be ensured, to slow down a degree of expansion of the battery 3 and even prevent the battery 3 from expanding. Furthermore, the operational performance of the battery 3 can be ensured, prolonging the service life and reducing the safety hazards.

It should be understood that due to inevitable processing errors, even batteries 3 of the same model can vary in size. The batteries 3 having different sizes require different sizes of clamping spaces 23 to adapt to the sizes of the batteries 3 to achieve the effect of clamping the batteries 3. Therefore, in the present disclosure, the first clamping part 21 is connected to the second clamping part 22 through the adjustment member 4, so as to adjust the size of the clamping space 23 by means of the adjustment member 4 to adapt to the size of the battery 3 and clamp the battery 3 tightly, which can prevent the battery 3 from expanding to ensure that the battery 3 has excellent operational performance, prolonging a service life of the battery 3 and reducing safety hazards. In addition, it is precisely because the size of the clamping space 23 in the present disclosure can be adjusted and can be adapted to the size of the battery 3, the first clamping part 21 and the second clamping part 22 can clamp the batteries 3 having different sizes without preparing a plurality of clamping members 2 with different sizes of the clamping space 23 to be adapted to the sizes of the batteries 3, which is beneficial to reducing a cost.

In one embodiment of the present disclosure, the battery 3 is a single one, and the energy storage device 100 may have energy of 1 KWH (1 kilowatt-hour), 2 KWH (2 kilowatt-hours), 3 KWH (3 kilowatt-hours), 4 KWH (4 kilowatt-hours), 5 KWH (5 kilowatt-hours), etc. That is, the battery 3 in the present disclosure may have a high capacity, in such a manner that a single battery 3 can constitute one energy storage device 100 to realize independent charging and discharging, reducing an occupied space of the energy storage device 100. Therefore, the energy storage device 100 in the present disclosure can be adapted to more application scenarios, such as residential energy storage and portable power sources. Compared to the energy storage device 100 using the plurality of batteries 3, this design using the single high-capacity battery 3 has a lower cost, making this design affordable and accessible for families in energy-poor regions, and thus providing affordable, reliable, and sustainable power sources for people in energy-poor regions around the world to help to improve use of electricity in energy-poor regions. Here, "KWH" stands for kilowatt-hour.

Exemplarily, when the energy storage device 100 in the present disclosure is an energy storage device having energy of 1 KWH (kilowatt hour), the energy storage device 100 having energy of 1 KWH of the present disclosure can provide 80 hours of lighting or 16 hours of electric fan use for an energy-poor household. Or, the energy storage device 100 having energy of 1 KWH of the present disclosure can further promote small household businesses, such as supporting 80 hours of irrigation or 10 hours of sewing machines operation, etc., in such a manner that people in energy-poor regions can continuously get household income increased and get improved lives. Or, in terms of public health, the energy storage device 100 having energy of 1 KWH of the present disclosure can further support small medical equipment, such as a medical small refrigerator, which can be used to store vaccines and medicines to improve medical conditions.

It is precisely because the battery 3 in the present disclosure adopts the high-capacity battery which has an expansion force usually larger than an expansion force of a plurality of low-capacity batteries in the related art, the first clamping part 21 and the second clamping part 22 are adopted in the present disclosure to clamp the battery 3. In addition, the first clamping part 21 and the second clamping part 22 can also adjust the degree of clamping on the battery 3 by means of the adjustment member 4, so as to avoid a situation where the battery 3 is clamped too loosely, which leads to significant expansion of the battery 3 and thus affect the battery's performance. Furthermore, the operational performance of the battery 3 can be ensured, the service life can be prolonged, and the safety hazards can be reduced.

On this basis, to meet requirements of a large expansion force, the present disclosure also limits a material of the first clamping part 21 and a material of the second clamping part 22 to metal, such as stainless steel, iron, aluminum, aluminum alloy, copper, copper alloy. The first clamping part 21 and the second clamping part 22 are made of metal. Compared to the fact that the first clamping part 21 and the second clamping part 22 are plastic components, a hardness of the first clamping part 21 and a hardness of the second clamping part 22 can range from 150HB to 220HB, which means that the first clamping part 21 and the second clamping part 22 have a stronger resistance to deformation, providing better clamping for the battery 3 to prevent expansion of the battery 3 to ensure that the battery 3 has excellent operational performance. In this way, the service life of the battery 3 can be prolonged, and the safety hazards can be reduced. Here, "HB" stands for Brinell hardness.

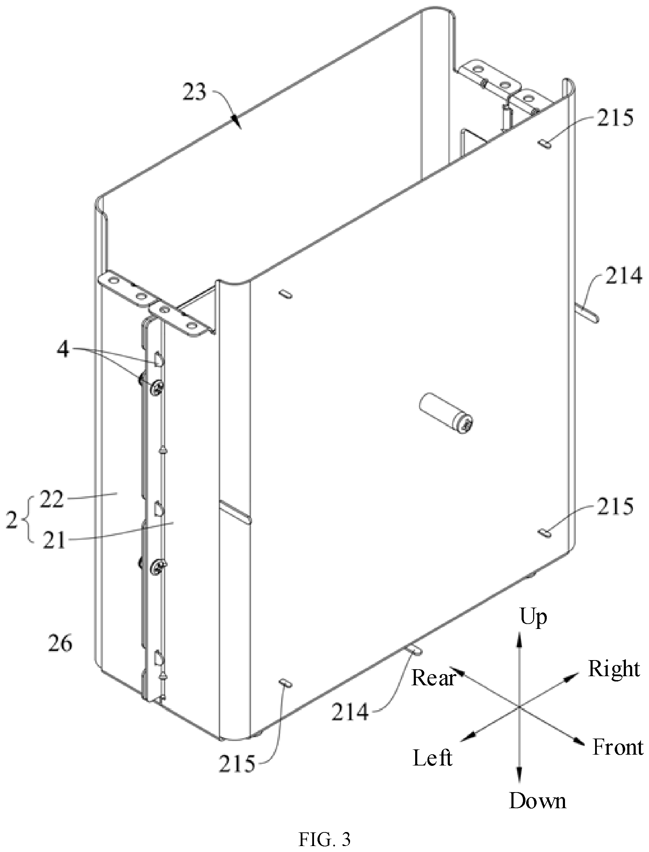

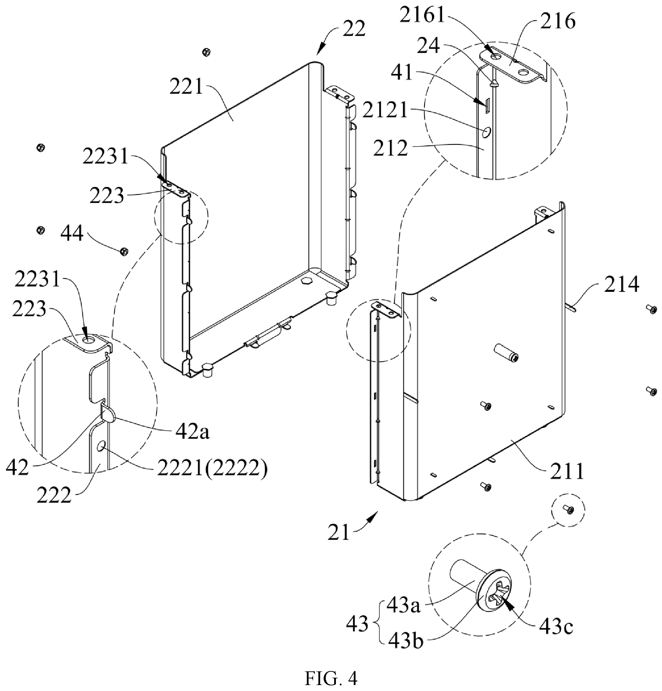

In the present disclosure, as illustrated in FIG. 3 and FIG. 4, the first clamping part 21 may include a first clamping body 211 and a first flange 212 connected to the first clamping body 211. The second clamping part 22 includes a second clamping body 221 and a second flange 222 connected to the second clamping body 221. The first clamping body 211 and the second clamping body 221 are connected by connecting the first flange 212 and the second flange 222 through the adjustment member 4. The clamping space 23 is formed between the first clamping body 211 and the second clamping body 221. Both the first flange 212 and the second flange 222 are located outside the clamping space 23. With the above structure, the first flange 212 and the second flange 222 can be facilitated to provide a setting position for the adjustment member 4, so as to facilitate allowing for the connection between the first clamping part 21 and the second clamping part 22 through the adjustment member 4.

In an optional embodiment, the adjustment member 4 includes a first slot 41 formed in the first flange 212 and a first bending part 42 disposed at the second flange 222. The first bending part 42 passes through the first slot 41. The first bending part 42 has a bent portion 42a protruding out of a surface of the first flange 212 facing away from the second flange 222. In addition, the bent portion 42a protrudes relative to the first flange 212 by a variable length. The bent portion 42a is bendable to abut against the first flange 212 to allow for connection between the first flange 212 and the second flange 222.

It should be understood that when the first clamping part 21 and the second clamping part 22 are assembled, and when the first flange 212 abuts against the second flange 222, the clamping space 23 is the smallest, and the bent portion 42a protrudes relative to the first flange 212 by the longest length. In this case, to ensure that the first clamping part 21 and the second clamping part 22 can clamp tightly the battery 3, the battery 3 generally has a size slightly larger than the smallest clamping space 23. When the size of the battery 3 is larger than the smallest clamping space 23, a spacing between the first flange 212 and the second flange 222 is formed to increase the clamping space 23. The bent portion 42a protrudes relative to the first flange 212 by a shorter length. The spacing between the first flange 212 and the second flange 222 can be compensated using the first bending part 42, in such a manner that the first clamping part 21 and the second clamping part 22 can always remain in close contact with the battery 3, and the battery 3 can be pressed tightly to prevent the battery 3 from expanding, ensuring the operational performance of the battery 3, prolonging the service life and reducing the safety hazards. By adopting the above structure, the adjustment member 4 has a relatively simple structure which is easy to realize, and is beneficial to reducing the cost.

In another optional embodiment, the adjustment member 4 may be a threaded member. Therefore, the adjustment member 4 can be configured to change a distance between the first flange 212 and the second flange 222 upon rotation of the adjustment member 4. That is, the distance between the first flange 212 and the second flange 222 can be changed by rotating the adjustment member 4, so as to change the size of the clamping space 23 to adapt to the size of the battery 3 and clamp the battery 3 tightly to prevent the battery 3 from expanding to ensure that the battery 3 has the excellent operational performance. In this way, the service life of the battery 3 can be prolonged and the safety hazards can be reduced.

Exemplarily, when the size of the battery 3 is larger than the smallest clamping space 23, the spacing between the first flange 212 and the second flange 222 is formed to increase the clamping space 23. In this case, the spacing between the first flange 212 and the second flange 222 can be compensated by the threaded member, in such a manner that the first clamping part 21 and the second clamping part 22 can always remain in close contact with the battery 3, and the battery 3 can be pressed tightly to prevent the battery 3 from expanding, ensuring the operational performance of the battery 3, prolonging the service life and reducing the safety hazards. By adopting the above structure, the adjustment member 4 has a relatively simple structure which is easy to realize, and is beneficial to reducing the cost.

In yet another optional embodiment, a plurality of adjustment members 4 are provided. The plurality of adjustment members 4 includes a first adjustment member and a second adjustment member. The first adjustment member includes the first slot 41 and the first bending part 42. The second adjustment member is the threaded member. In this way, the first flange 212 and the second flange 222 can be connected to each other through cooperation between the first slot 41 and the first bending part 42 as well as connected to each other by means of threaded connection.

In the present disclosure, a scheme is adopted in which there are the plurality of adjustment members 4, and the adjustment member 4 includes a plurality of first adjustment members and a plurality of second adjustment members. The plurality of first adjustment members and the plurality of second adjustment members are arranged alternately. In this way, connection reliability between the first clamping part 21 and the second clamping part 22 can be improved, enhancing a clamping effect of the first clamping part 21 and the second clamping part 22 on the battery 3.

In some embodiments, as illustrated in FIG. 4, when the adjustment member 4 is the threaded member, as a first optional embodiment, the first flange 212 has a first connection hole 2121. The second flange 222 has a threaded hole 2221 corresponding to the first connection hole 2121. The adjustment member 4 includes a threaded rod 43a and a head 43b having a greater diameter than the threaded rod 43a. The threaded rod 43a passes through the first connection hole 2121 and the threaded hole 2221. An end of the threaded rod is threadedly connected to the threaded hole 2221 on the second flange 222. The head 43b is connected to another end of the threaded rod 43a and abuts against the surface of the first flange 212 facing away from the second flange 222. In another exemplary embodiment of the present disclosure, the adjustment member 4 may be a bolt, a screw, or the like.

In this embodiment, tools such as a slotted screwdriver, a phillips screwdriver, or a pozidriv screwdriver can be inserted into a slot 43c of the head 43b to rotate the threaded rod 43a, which can adjust the distance between the first flange 212 and the second flange 222 to adapt to the size of the battery 3. In this way, the first clamping part 21 and the second clamping part 22 can remain in close contact with the battery 3 to press the battery 3 tightly, preventing expansion of the battery 3. Therefore, the operational performance of the battery 3 can be ensured, prolonging the service life and reducing the safety hazards.

Further, in some embodiments, the adjustment member 4 may further include a nut 44. The nut 44 is threadedly connected to a periphery of another end of the threaded rod 43a and abuts against a surface of the second flange 222 facing away from the first flange 212. In this way, reliability of the connection between the first clamping part 21 and the second clamping part 22 can be further improved, and the clamping effect of the first clamping part 21 and the second clamping part 22 on the battery 3 can be enhanced.

As a second optional embodiment, the first flange 212 has a first connection hole 2121, the second flange 222 has a second connection hole 2222 corresponding to the first connection hole 2121. The adjustment member 4 includes a threaded component 43 and a nut 44. The threaded component 43 includes a threaded rod 43a and a head 43b having a greater diameter than the threaded rod 43a. The threaded rod 43a passes through the first connection hole 2121 and the second connection hole 2222. The head 43b is connected to an end of the threaded rod 43a and abuts against the surface of the first flange 212 facing away from the second flange 222. The nut 44 is threadedly connected to a periphery of another end of the threaded rod 43a and abuts against a surface of the second flange 222 facing away from the first flange 212. In another exemplary embodiment of the present disclosure, the threaded component 43 may be the bolt, the screw, or the like.

In this embodiment, similarly, tools such as the slotted screwdriver, the phillips screwdriver, or the pozidriv screwdriver can be inserted into the slot 43c of the head 43b to rotate the threaded rod 43a, which can adjust the distance between the first flange 212 and the second flange 222 to adapt to the size of the battery 3. In this way, the first clamping part 21 and the second clamping part 22 can remain in close contact with the battery 3 to press the battery 3 tightly, preventing expansion of the battery 3. Therefore, the operational performance of the battery 3 can be ensured, prolonging the service life and reducing the safety hazards.

Since the energy storage device 100 in the present disclosure adopts a single battery 3 having a relatively small volume and a lower cost, a thickness of the first clamping part 21 and a thickness of the second clamping part 22 are usually designed to be relatively thin to adapt to the energy storage device 100 having the small volume and the low cost. Therefore, the threaded hole 2221 on the second flange 222 also has a relatively small depth. In this way, a threaded hole on the nut 44 usually has a depth larger than the depth of the threaded hole 2221 on the second flange 222. Threaded connection between the threaded rod 43a and the nut 44 can be more stable than threaded connection between the threaded rod 43a and the threaded hole 2221 on the second flange 222. Therefore, the first flange 212 is connected to the second flange 222 through cooperation between the threaded rod 43a and the nut 44, which results in a more reliable connection between the first clamping part 21 and the second clamping part 22 than through cooperation between the threaded rod 43a and the threaded hole 2221 on the second flange 222. In this way, the clamping effect of the first clamping part 21 and the second clamping part 22 on the battery 3 can be enhanced.

It should be understood that in other embodiments, when the adjustment member 4 is the threaded member and the plurality of adjustment members 4 is provided, a part of the plurality of adjustment members 4 may be structures including the threaded rod 43a and the head 43b, and another part of the plurality of adjustment members 4 may be structures including the threaded component 43 and the nut 44.

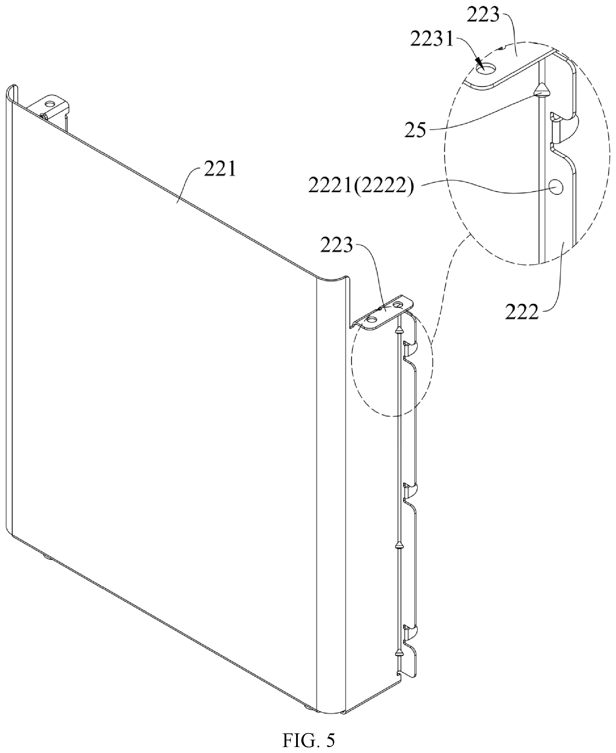

In some embodiments, as illustrated in FIG. 4 and FIG. 5, the first clamping part 21 further includes a first reinforcing rib 24 connected to the first flange 212 and the first clamping body 211. And/or, the second clamping part 22 further includes a second reinforcing rib 25 connected to the second flange 222 and the second clamping body 221.

A reinforcing rib is disposed at a connection between a clamping body (that is, the first clamping body 211 and the second clamping body 221) and a flange (that is, the first flange 212 and the second flange 222) to improve structural strength of the first clamping part 21 and structural strength of the second clamping part 22, enabling the clamping member 2 to better cope with demands of the large expansion force of the battery 3.

In some embodiments, the first clamping part 21 and the second clamping part 22 may be fixed in the housing 1 by the screw or the bolt to facilitate mounting and fixation of the clamping member 2 in the housing 1.

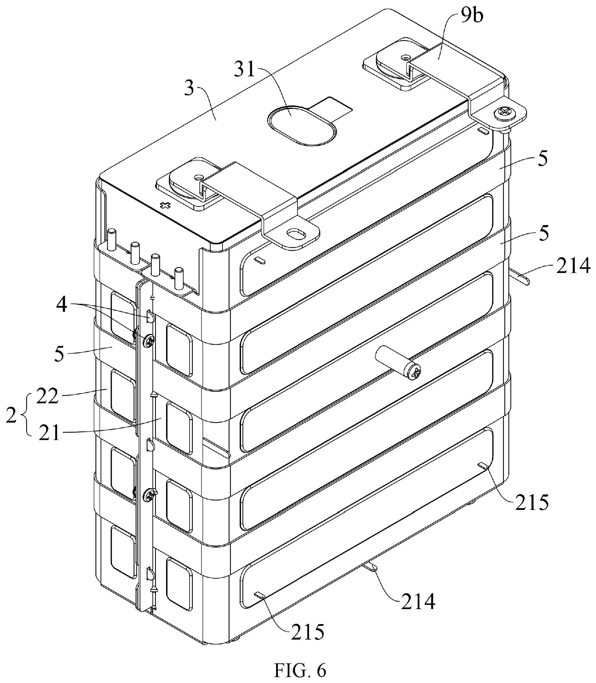

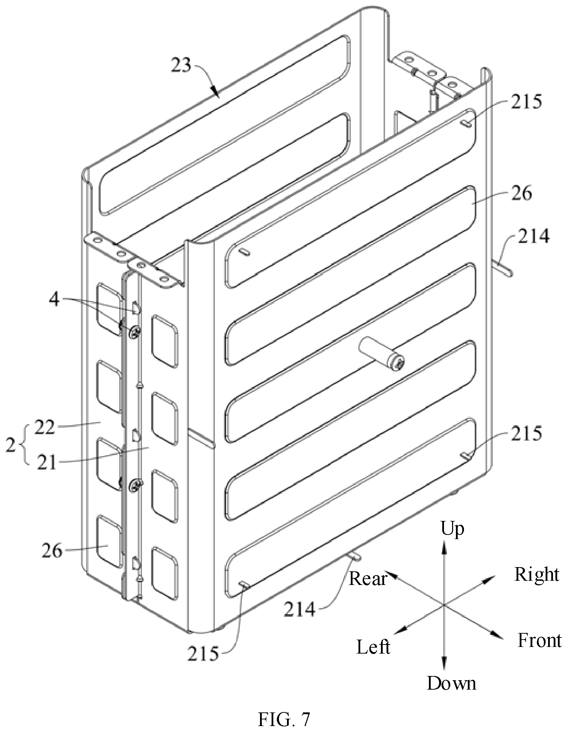

In some embodiments, as illustrated in FIG. 6 to FIG. 8, the energy storage device further includes a strap 5. The strap 5 is arranged around a periphery of the first clamping part 21 and a periphery of the second clamping part 22 to further fix and clamp the first clamping part 21 and the second clamping part 22, in such a manner that the clamping effect of the first clamping part 21 and the second clamping part 22 on the battery 3 can be further improved, thereby enabling the clamping member 2 to better cope with the demands of the large expansion force of the battery 3.

When the clamping part (i.e., the first clamping part 21 and the second clamping part 22) include a flange (i.e., the first flange 212 and the second flange 222), the flange has avoidance holes for the strap 5 to pass through to avoid interference between the strap 5 and the flange. Or, the flange is located at a side of the strap 5, and in this case, the strap 5 does not pass through the flange, but is offset from the flange, so as to avoid the interference between the strap 5 and the flange.

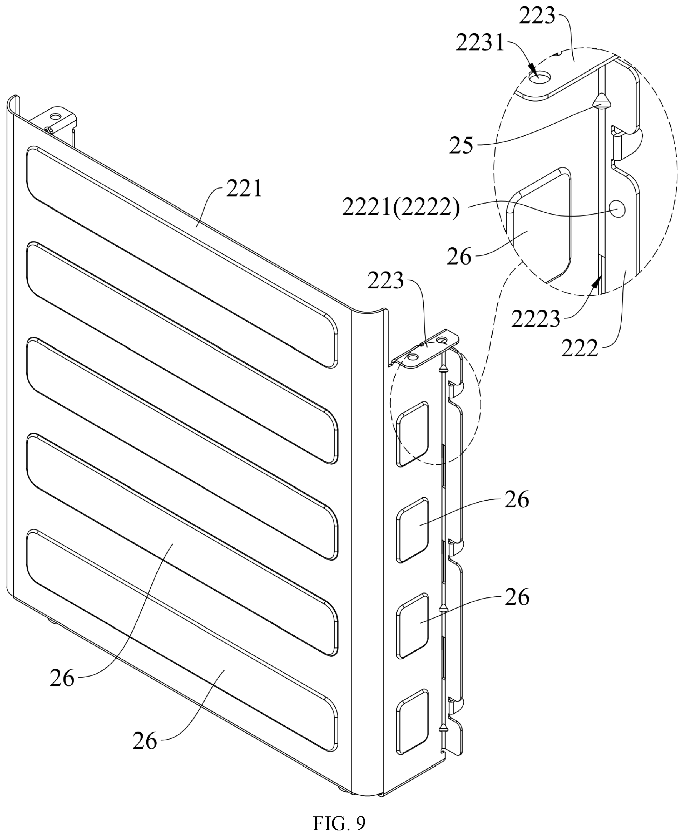

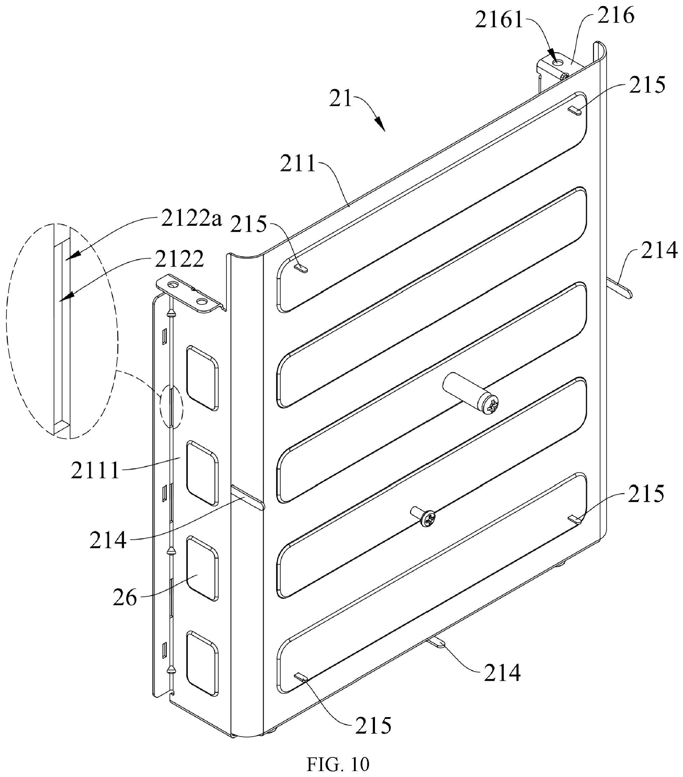

Exemplarily, as illustrated in FIG. 6 to FIG. 10, the first flange 212 further has a first avoidance hole 2122. The second flange 222 further has a second avoidance hole 2223. A projection of a circumferential edge of the second avoidance hole 2223 on the first flange 212 coincides with a circumferential edge of the first avoidance hole. The strap 5 is arranged around a periphery of the first clamping body 211 and a periphery of the second clamping body 221. In addition, the strap 5 passes through the first avoidance hole 2122 and the second avoidance hole 2223. The first clamping body 211 has a connecting surface 2111 configured to be connected to the first flange 212, and the first avoidance hole 2122 has a hole wall surface 2122a coplanar with the connecting surface, enabling the strap 5 to abut against the connecting surface 2111 and the hole wall surface 2122a when the strap 5 passes through the first avoidance hole 2122 and the second avoidance hole 2223. Compared with a manner in which the hole wall surface 2122a and the connecting surface 2111 are not coplanar (for example, the hole wall surface 2122a is higher than the connecting surface 2111), there is no gap between the strap 5 and the clamping body. In this way, a close fit between the strap 5 and the clamping body can be ensured, and a tightening effect of the strap 5 on the first clamping part 21 and the second clamping part 22 can be improved.

When the present disclosure adopts the method of opening an avoidance hole in the flange to avoid the strap 5, and the adjustment member 4 includes the first slot 41 and the first bending part 42, a projection of the first avoidance hole 2122 on the first clamping body 211 at least partially overlaps with a projection of the first slot 41 on the first clamping body 211. That is, in a protruding direction of the first flange 212 relative to the first clamping body 211, the first avoidance hole 2122 is at least partially arranged corresponding to the first slot 41. The second flange 222 further has a second avoidance hole 2223. A projection of a circumferential edge of the second avoidance hole 2223 on the first flange 212 coincides with a circumferential edge of the first avoidance hole 2122. The strap 5 is arranged around the periphery of the first clamping body 211 and the periphery of the second clamping body 221. In addition, the strap 5 passes through the first avoidance hole 2122 and the second avoidance hole 2223.

It should be understood that when the battery 3 expands, the connection between the first clamping part 21 and the second clamping part 22 is generally the most likely to break open (that is, the first bending part 42 is likely to be separated from the first slot 41). With the above design, the projection of the first avoidance hole 2122 on the first clamping body 211 at least partially overlaps with the projection of the first slot 41 on the first clamping body 211. Since the strap 5 passes through the first avoidance hole 2122, a projection of the first bending part 42 on the first clamping body 211 at least partially overlaps with a projection of the strap 5 on the first clamping body 211. That is, in the protruding direction of the first flange 212 relative to the first clamping body 211, the first bending part 42 is not completely staggered with the strap 5. In this way, a position where the strap 5 acts on the clamping member 2 is brought closer to a position where the first bending part 42 acts on the clamping member 2, which not only improves the clamping effect of the first clamping part 21 and the second clamping part 22, but also allows the strap 5 to further fasten the position where the first clamping part 21 and the second clamping part 22 are most likely to break apart, reducing a possibility of the first clamping part 21 and the second clamping part 22 breaking apart.

In some embodiments, the strap 5 is provided with a first buckle portion (not illustrated) at an end of the strap 5, and the strap 5 is provided with a second buckle portion (not illustrated) at another end of the strap 5. The second buckle portion is engaged with the first buckle portion. Two ends of the strap 5 can be fixed through cooperation between the first buckle portion and the second buckle portion. One of the first buckle portion and the second buckle portion may be an engagement groove, and another one of the first buckle portion and the second buckle portion may be an engagement strip. The engagement strip is inserted into the engagement groove to realize engagement between the first buckle portion and the second buckle portion, to realize fixation of two ends of the strap 5.

Exemplarily, a plurality of the first buckle portion and/or a plurality of the second buckle portion may be provided. For example, the plurality of the first buckle portion may be provided, and one second buckle portion may be provided. The plurality of first buckle portions are arranged at intervals in an extension direction of the strap 5 (that is, a circumferential direction of the battery 3). The second buckle portion may be inserted into any one of the plurality of first buckle portions. Or, the plurality of second buckle portions are provided, and one first buckle portion is provided. The plurality of second buckle portions are arranged at intervals in the extension direction of the strap 5, and the first buckle portion can be inserted into any one of the plurality of the second buckle portions. Or, the plurality of first buckle portions and the plurality of second buckle portions are both provided. The plurality of first buckle portions are arranged at intervals in an extension direction of the strap 5. The plurality of second buckle portions are arranged at intervals in the extension direction of the strap 5. Any one of the plurality of first buckle portions can be inserted into any one of the plurality of second buckle portions. By adopting the above design method, a size of a clamping ring formed when two ends of the strap 5 are fixed can be changed, in such a manner that the strap 5 can be adapted to the clamping members 2 having different sizes of the clamping space 23, so as to clamp the batteries 3 with different sizes, resulting in high applicability.

In some embodiments, the first clamping part 21 and/or the second clamping part 22 is provided with a plurality of first protrusions 26 arranged at intervals and protruding from an outer side surface of the first clamping part 21 and/or the second clamping part 22. In particular, the first clamping body 211 and/or the second clamping body 221 is provided with a plurality of first protrusions 26 arranged at intervals and protruding from an outer side surface of the first clamping body 211 and/or the second clamping body 221. Any two adjacent first protrusions 26 of the plurality of first protrusions 26 are located at two opposite sides of the strap 5, respectively. In this way, a position of the strap 5 can be limited by using two adjacent first protrusions 26, which can avoid the strap 5 from slipping, facilitating better fixation and clamping of the first clamping part 21 and the second clamping part 22 by the strap 5.

In some embodiments, the first clamping part 21 and/or the second clamping part 22 is provided with a second protrusion (not illustrated) protruding from an inner side surface of the first clamping part 21 and/or the second clamping part 22. In particular, the first clamping body 211 and/or the second clamping body 221 is provided with the second protrusion protruding from an outer side surface of the first clamping body 211 and/or the second clamping body 221. The second protrusion abuts against the battery 3, and the second protrusion is deformable when subjected to a force to clamp the battery 3 to improve the clamping degree of the first clamping part 21 and the second clamping part 22 on the battery 3. Also, it should be understood that assuming that the size of the clamping space has been adjusted, when the batteries 3 having different sizes are located in the clamping space, the degree of extrusion of the battery 3 on the second protrusion will vary. The larger the battery 3, the greater the degree of extrusion on the second protrusion, and the greater the degree of deformation of the second protrusion, to allow the clamping space to be adaptively increased. In this case, setting of the second protrusion can also be adapted to the batteries 3 having different sizes.

Exemplarily, the second protrusion is deformable when subjected to the force, in such a manner that soft contact can be formed between the battery 3 and the clamping parts (i.e., the first clamping part 21 and the second clamping part 22), to avoid abrasion of the battery 3.

In some embodiments, as illustrated in FIG. 6 to FIG. 11, the housing 1 is provided with a first side rib 131 protruding from an inner side wall of the housing 1. The first side rib 131 abuts against the first clamping part 21 and/or the second clamping part 22. In addition, the first side rib 131 has a first guide surface 1311, such as an inclined guide surface or an arc-shaped guide surface. The first guide surface 1311 is configured to guide the clamping member 2 to be mounted at a predetermined position inside the housing 1, such as a bottom of the housing 1. Exemplarily, the housing 1 has a mounting opening at an end of the housing 1. The first side rib 131 can extend in an opening direction of the mounting opening to be connected to an inner bottom wall of the housing 1. The first guide surface 1311 is disposed at a side of the first side rib 131 facing away from the inner bottom wall of the housing 1. During assembly, the first clamping part 21 and the second clamping part 22 can be inserted into the housing 1 from the mounting opening, and can be mounted to the bottom of the housing 1 under the guidance of the first guide surface 1311.

Setting of the first side rib 131 can increase structural strength of the housing 1, slow down deformation of the housing 1 when the housing 1 is subjected to external pressure, or prevent the housing 1 from being deformed to protect the battery 3 from being pressed when the housing 1 is subjected to external pressure. Also, the first guide surface 1311 is disposed at the first side rib 131, which can not only prevent the first side rib 131 from blocking and hitting the first clamping part 21 and the second clamping part 22 when the first clamping part 21 and the second clamping part 22 are inserted into the housing 1 from the mounting opening, but also can guide mounting of the first clamping part 21 and the second clamping part 22.

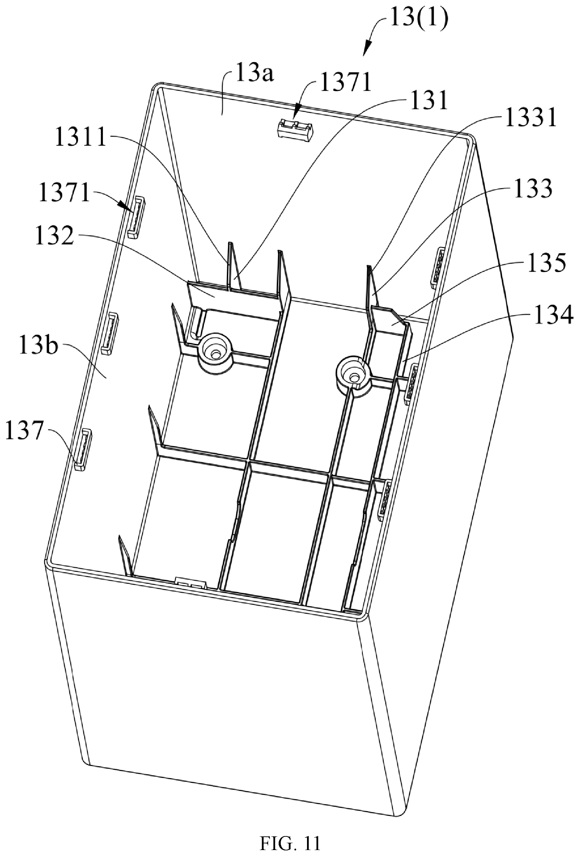

In some embodiments, a plurality of first side ribs 131 is provided. The plurality of first side ribs 131 is arranged at intervals in a circumferential direction of the housing 1. The inner side wall of the housing 1 includes a first side wall 13a facing towards a side surface of the battery 3 and a second side wall 13b facing towards a wide surface of the battery 3. The second side wall 13b is provided with a stop plate 132 protruding from the second side wall 13b. The stop plate 132 is connected to at least one of the plurality of first side ribs 131 disposed at the first side wall 13a. For example, as illustrated in FIG. 11, the stop plate 132 is connected to two first side ribs 131 disposed at the first side wall 13a. In addition, the stop plate 132 is spaced apart from the first side wall of the housing 1, and the stop plate 132 abuts against the first clamping part 21 and/or the second clamping part 22 to limit a position of the first clamping part 21 and/or the second clamping part 22 in the housing 1, which can prevent the clamping member 2 from driving the battery 3 to shake or move, so as to avoid collision with the battery 3 and protect the battery 3. The stop plate 132 protrudes from the second side wall 13b and extends to be connected to the first side rib 131, and the stop plate 132 can abut against the first clamping part 21 and/or the second clamping part 22. Therefore, the first side rib 131 abuts against the first clamping part 21 and/or the second clamping part 22 by the stop plate 132, which can increase a contact area between the first side rib 131 and the clamping parts, improve a limiting effect of the first side rib 131 on the clamping parts, and further avoid wear of the first side rib 131 on the clamping parts compared with a method in which the first side rib 131 directly abuts against the clamping parts (the first clamping part 21 and the second clamping part 22).

Further, in the present disclosure, the stop plate 132 is connected not only to the second side wall 13b but also to the first side rib 131 and the inner bottom wall of the housing 1. When the stop plate 132 abuts against the clamping parts, the first side rib 131 and the inner bottom wall of the housing 1 can support the stop plate 132 to provide a supporting force for the stop plate 132, and thus the stop plate 132 is less likely to be crushed when the stop plate 132 abuts against the clamping parts.

Further, the stop plate 132 is spaced apart from the first side wall 13a of the housing 1, which is conducive to reducing use of materials and a weight of the housing 1. Therefore, a cost can be reduced and a lightweight design can be realized.

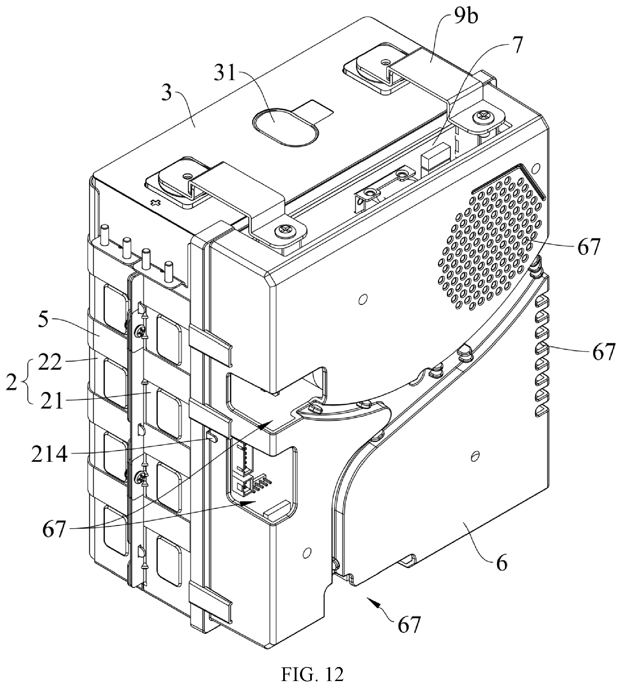

In some embodiments, as illustrated in FIG. 1, FIG. 2 and FIG. 12, the energy storage device 100 further includes a motherboard mounting member 6 and a circuit board 7 that are disposed inside the housing 1. The motherboard mounting member 6 is connected to the first clamping part 21 and located at a side of the battery 3. The circuit board 7 is mounted at the motherboard mounting member 6 and connected to the battery 3. In addition, a spacing is formed between the circuit board 7 and the first clamping part 21, so as to provide an expansion space for the battery 3 to prevent the battery 3 from squeezing the circuit board 7 when the battery 3 expands, protecting the circuit board 7.

Therefore, in the design of the present disclosure, to prevent the battery 3 from squeezing the circuit board 7 when the battery 3 expands, not only the clamping member 2 is disposed to clamp the battery 3 to reduce the degree of expansion of the battery 3, or prevent the battery 3 from expanding, thus avoiding the circuit board 7 from being squeezed when the battery 3 expands. Further, the motherboard mounting member 6 is further disposed. The circuit board 7 is mounted on the first clamping part 21 through the motherboard mounting member 6. The circuit board 7 is mounted and supported by the motherboard mounting member 6 to allow a spacing to be formed between the circuit board 7 and the first clamping part 21 to provide an expansion space for the battery 3. In this way, the battery 3 can be better prevented from squeezing the circuit board 7 during expansion of the battery 3, and thus the circuit board 7 can be better and more effectively protected.

In the present disclosure, the circuit board 7 can be used as a key component for monitoring, controlling, and protecting the battery 3. The circuit board 7 can integrate a Battery Management System (BMS). On one hand, the BMS can monitor and manage parameters such as a voltage, a temperature, a charging state, and a discharging state of the battery 3 to avoid dangerous situations such as overcharging, over discharging, overcurrent, and short circuits, ensuring safe operation of a battery cell and prolonging an operation lifespan of the battery cell. On the other hand, since the energy storage device 100 of the present disclosure is a battery system including a single battery 3, which is a low-voltage design, a safe use coefficient for operators can be greatly improved during production and maintenance and a risk coefficient of products can be reduced. Also, based on voltage transformation provided by an internal voltage conversion circuit of the battery management system, the low-voltage battery system can output high voltages adapted to different application scenarios. That is, flexible voltage increase and decrease can be realized while reducing difficulty of operation.

Exemplarily, functional circuits of different functions are disposed in the circuit board 7, such as a bidirectional buck-boost circuit (such as a Buck/Boost circuit), a bidirectional isolation circuit (such as an LLC circuit), and an AC-DC conversion circuit (such as a CCM Totem-Pole, a continuous conduction totem pole). It should be understood that in practice, the circuit board 7 may integrate different functional circuits in the circuit board 7 based on application scenarios of the energy storage device 100 to meet application requirements.

The energy storage device 100 of the present disclosure is the battery system including the single battery 3, which is a low-voltage design. Generally, a voltage value of the single battery 3 is relatively low, generally about 3.2 V. When the energy storage device 100 of the present disclosure is discharged, the 3.2 V DC voltage output from the battery 3 may be boosted to 310V DC through the bidirectional buck-boost circuit on the circuit board 7, and then inverted to 220V AC through the AC-DC conversion circuit on the circuit board 7, so as to meet charging requirements of to-be-charged devices and realize discharge of the energy storage device 100. When the energy storage device 100 of the present disclosure is charged, the externally input 220V AC is inverted to the 310V DC through the AC-DC conversion circuit on the circuit board 7, and then the voltage is stepped down to the voltage of 3.2 V DC by the bidirectional buck-boost circuit on the circuit board 7, so as to meet charging requirements of the battery 3 and realize charging for the energy storage device 100.

In the present disclosure, the motherboard mounting member 6 may be a support post structure, a housing structure having a cavity, or the like. When the motherboard mounting member 6 is the support post structure, the motherboard mounting member 6 protrudes from a surface of the first clamping part 21 facing away from the battery 3. The circuit board 7 is disposed at an end surface of the motherboard mounting member 6 facing away from the first clamping part 21 to allow the spacing to be formed between the circuit board 7 and the first clamping part 21. When the motherboard mounting member 6 is the housing structure having the cavity, the circuit board 7 is mounted in the cavity of the motherboard mounting member 6 to allow the spacing to be formed between the circuit board 7 and the first clamping part 21.

In some embodiments, the motherboard mounting member 6 is the housing structure having the cavity, which not only can allow the spacing to be formed between the circuit board 7 and the first clamping part 21 to avoid the circuit board 7 from being squeezed when the battery 3 expands, but also can protect the circuit board 7 from being externally squeezed when being subjected to an external pressure, helping to ensure operational performance and service life of the circuit board 7.

When the motherboard mounting member 6 is the housing structure having the cavity, the present disclosure further indicates that even if the battery 3 expands to allow the first clamping part 21 to be deformed, since the motherboard mounting member 6 is connected to the first clamping part 21 and the circuit board 7 is mounted on the motherboard mounting member 6, when the battery 3 expands, the motherboard mounting member 6 moves in an expansion direction (outwardly) of the battery, and the circuit board 7 moves outwardly together with the motherboard mounting member 6. In this way, the circuit board 7 can maintain a predetermined distance from the motherboard mounting member 6 even if the battery 3 expands, in such a manner that even if the battery 3 expands, the circuit board 7 may not be squeezed. In addition, in general, components are disposed at a side of the circuit board 7 facing away from the first clamping part 21. That is, the components are located at a side of the circuit board 7 facing towards the motherboard mounting member 6. Therefore, when the battery 3 expands to some extent and can no longer squeeze the housing 1, and the distance between the first clamping part 21 and the circuit board 7 is reduced, even if there is squeezing, the squeezing may occur at a side of the circuit board 7 without components, providing effective protection for the components on the circuit board 7.

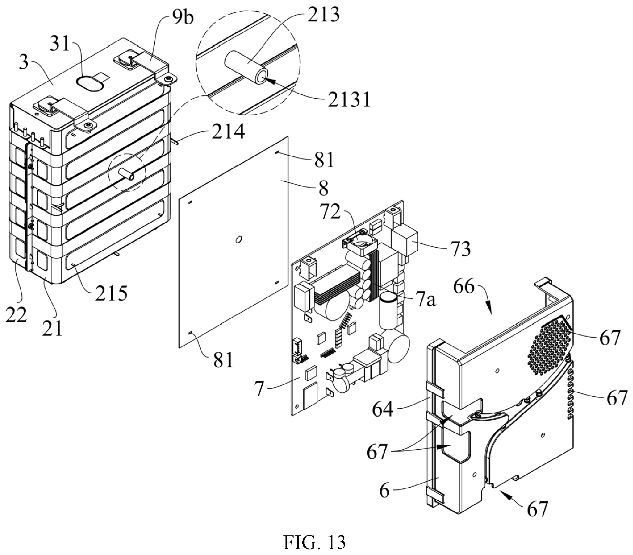

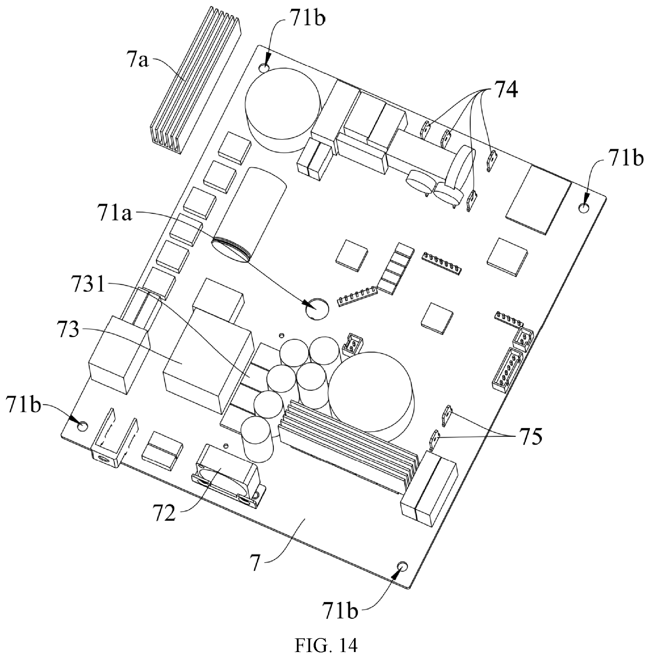

Further, as illustrated in FIG. 13 and FIG. 14, the first clamping part 21 is provided with a protruding column 213 at a middle part of the first clamping part 21. In particular, the first clamping body 211 is provided with the protruding column 213 at a middle part of the first clamping body 211. The circuit board 7 has a first through hole 71a. The protruding column 213 passes through the first through hole 71a disposed at the circuit board 7. During assembling, the circuit board 7 is usually mounted to the motherboard mounting member 6, and then an entirety of the circuit board 7 and the motherboard mounting member 6 is assembled to the first clamping part 21. Therefore, when assembling the circuit board 7 and the motherboard mounting member 6 to the first clamping part 21, assembly of the entirety of the circuit board 7 and the motherboard mounting member 6 can be positioned through cooperation of the protruding column 213 and the first through hole 71a, facilitating assembly between the entirety of the circuit board 7 and the motherboard mounting member 6 and the first clamping part 21.

Further, the protruding column 213 can be connected to an inner wall surface of the motherboard mounting member 6 through the first through hole 71a. In this way, the middle part of the first clamping part 21 can be supported by the protruding column 213, and a bearing capacity of the motherboard mounting member 6 can be improved to avoid a situation that the circuit board 7 and the battery 3 are squeezed when the circuit board 7 and the battery 3 are subjected to an external pressure, protecting the circuit board 7 and the battery 3.

Further, as illustrated in FIG. 13 to FIG. 15, the motherboard mounting member 6 is provided with a sleeve structure 61 located in the cavity of the motherboard mounting member 6. The protruding column 213 on the first clamping part 21 passes through a hollow portion of the sleeve structure 61 to allow for connection between the protruding column 213 and the motherboard mounting member 6, providing connection stability and mounting convenience between the protruding column 213 and the motherboard mounting member 6.

Exemplarily, the sleeve structure 61 is provided with a plurality of first reinforcing ribs 611 at an outer peripheral surface of the sleeve structure 61. The plurality of first reinforcing ribs 611 is arranged at intervals in the cavity of the motherboard mounting member 6 in a circumferential direction of the sleeve structure 61. In addition, the plurality of first reinforcing ribs 611 is connected to the inner wall surface of the motherboard mounting member 6, respectively. Setting of the first reinforcing rib 611 helps to further enhance structural strength of the motherboard mounting member 6 and improve the bearing capacity of the motherboard mounting member 6, so as to avoid the situation that the circuit board 7 and the battery 3 are squeezed when the circuit board 7 and the battery 3 are subjected to the external pressure, protecting the circuit board 7 and the battery 3.

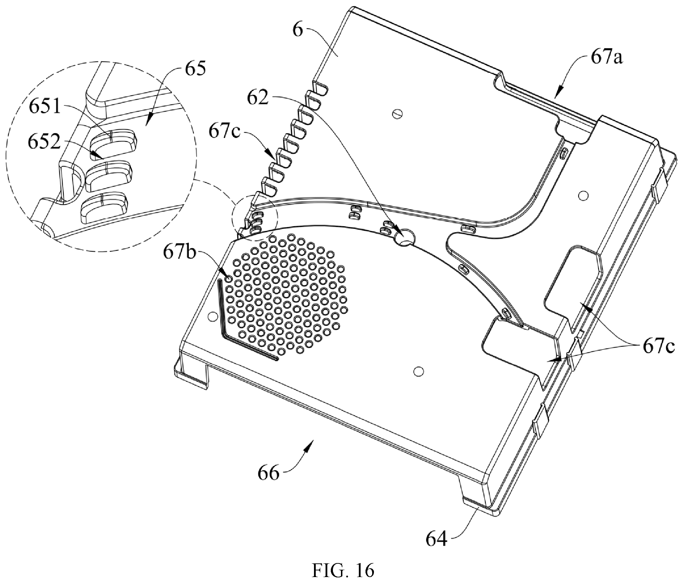

In some embodiments, as illustrated in FIG. 13 to FIG. 16, the protruding column 213 has a first threaded connection hole 2131. The motherboard mounting member 6 has a second through hole 62 in communication with an interior of the sleeve structure 61. Fasteners such as the bolt and the screw are sequentially pass through the second through hole 62, the hollow portion of the sleeve structure 61, and the first threaded connection hole 2131. In addition, the fastener is threadedly connected to the first threaded connection hole 2131 on the protruding column 213 to realize mounting and fixation between the motherboard mounting member 6 and the first threaded connection hole 2131. In this way, setting of the protruding column 213 not only can provide support for the motherboard mounting member 6 to improve the bearing capacity of the motherboard mounting member 6, avoiding the circuit board 7 and the battery 3 from being squeezed when the circuit board 7 and the battery 3 are subjected to the external pressure. Further, a connection position of mounting and fixation between the motherboard mounting member 6 and the first clamping part 21 can be provided to facilitate mounting and connection between the motherboard mounting member 6 and the first clamping part 21.

In some embodiments, the motherboard mounting member 6 has an engagement groove 63a at an edge of the motherboard mounting member 6. The first clamping part 21 is provided with a protruding bar 214 at a surface of the first clamping part 21 facing towards the motherboard mounting member 6. In particular, the first clamping body 211 is provided with the protruding bar 214 at a surface of the first clamping body 211 facing towards the motherboard mounting member 6. The protruding bar 214 extends towards the motherboard mounting member 6, and the protruding bar 214 is inserted into the engagement groove 63a. Therefore, mounting of the motherboard mounting member 6 and the first clamping part 21 can be positioned and limited through insertion between the protruding bar 214 and the engagement groove 63a to enable the motherboard mounting member 6 to be mounted to the first clamping part 21, facilitating improvement of a mounting efficiency of the motherboard mounting member 6.

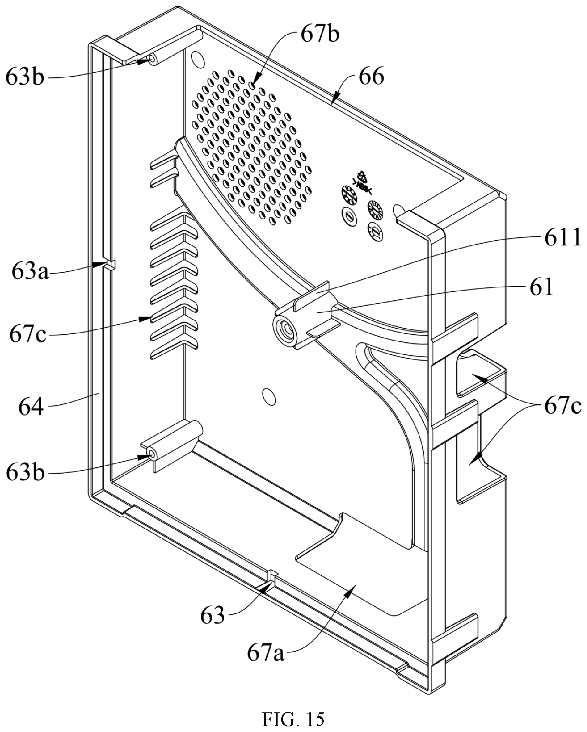

In some embodiments, the circuit board 7 has a third connection hole 71b at an edge of the circuit board 7. For example, as illustrated in FIG. 14 and FIG. 15, the circuit board 7 has the third connection hole 71b at four corners of the circuit board 7. Correspondingly, the motherboard mounting member 6 also has a fourth connection hole 63b. A projection of a circumferential edge of the fourth connection hole 63b on the circuit board 7 coincides with a circumferential edge of the third connection hole 71b. That is, the fourth connection hole 63b is arranged corresponding to the third connection hole 71b. Fasteners such as the bolt and the screw sequentially pass through the third connection hole 71b and the fourth connection hole 63b. In addition, the fastener is threadedly connected to the fourth connection hole 63b to realize mounting and fixation between the circuit board 7 and the motherboard mounting member 6. The mounting and the fixation between the circuit board 7 and the motherboard mounting member 6 are realized by the above method, resulting in simple mounting and operation.

In some embodiments, the motherboard mounting member 6 is provided with a first step structure 64 at an edge of the motherboard mounting member 6. The first step structure 64 extends along a peripheral edge of the motherboard mounting member 6. In addition, the first step structure 64 is arranged around an outer periphery of the first clamping part 21. In particular, the first step structure 64 is arranged around an outer periphery of the first clamping body 211, and the first step structure 64 further abuts against a top of the battery 3. In this way, arrangement of the first step structure 64, on the one hand, enables the motherboard mounting member 6 to wrap around a side portion of the first clamping body 211, and allows for a further interlocking between the motherboard mounting member 6 and the first clamping body 211, in such a manner that the motherboard mounting member 6 can be more conveniently mounted at the first clamping part 21 to further improve the mounting efficiency of the motherboard mounting member 6. On the other hand, it should be noted that since the clamping member 2, the battery 3, and the adjustment member 4 in the present disclosure are all located inside the housing 1, the housing 1 generally includes at least two shells. For example, the housing 1 includes a top shell 11 and a bottom shell 13 connected to the top shell 11. An accommodation space formed by the top shell 11 and the bottom shell 13 is configured to accommodate the clamping member 2, the battery 3, and the adjustment member 4. Also, since in the present disclosure during assembly, the adjustment member 4 needs to be adjusted to allow the clamping space 23 to be adapted to the size of the battery 3. Usually, the battery 3 and the clamping member 2 are assembled together, and then a bottom of an entirety of the battery 3 and the clamping member 2 is inserted into an internal space of the bottom shell 13 from an opening of the bottom shell 13, and the top shell 11 is finally assembled, which is commonly understood as forward mounting of the battery 3. However, since the internal space of the bottom shell 13 is usually much deeper than an internal space of the top shell 11 in a height direction of the battery 3, when the bottom of the entirety of the battery 3 and the clamping member 2 is inserted into the internal space of the bottom shell 13 from the opening of the bottom shell 13, if the entirety of the battery 3 and the clamping member 2 is released, there is still a predetermined spacing between the bottom of the entirety of the battery 3 and the clamping member 2 and an inner bottom surface of the bottom shell 13, in such a manner that the entirety of the battery 3 and the clamping member 2 may collide with the bottom shell 13 to easily cause some damage to the battery 3, the clamping member 2, and the bottom shell 13. Therefore, in the present disclosure, the battery 3 and the clamping member 2 are usually assembled together, and then a top of the entirety of the battery 3 and the clamping member 2 is connected to the top shell 11, and finally the bottom shell 13 is arranged around an outer periphery of the entirety of the battery 3 and the clamping member 2 to enable the bottom shell 13 to be connected to the top shell 11, which is commonly understood as reverse mounting of the battery 3. When the battery 3 is mounted in reverse, a collision between the entirety of the battery 3 and the clamping member 2 and the bottom shell 13 can be avoided, compared to the forward mounting of the battery 3. On this basis, the first step structure 64 abuts against the top of the battery 3, which can reduce a possibility that the battery 3 is separated from the clamping space 23 during the reverse mounting of the battery 3.

In some embodiments, the motherboard mounting member 6 has a wiring groove 65 at an outer surface of the motherboard mounting member 6. A separating protrusion 651 is disposed in the wiring groove 65 and configured to divide the wiring groove 65 into a plurality of wiring sub-grooves 652. The plurality of wiring sub-grooves 652 is configured to separate bundles of wires electrically connected to the circuit board 7. In this way, the bundles of wires electrically connected to the circuit board 7 can be bundled and guided by the wiring wire 65 to enable wirings to be arranged more concisely, avoiding problems such as confusion, cross distribution, and intertwining of the bundles of wires, and thus facilitating reducing occupation of the internal space of the housing 1 by the bundles of wires. The bundles of wires are also electrically connected to a power socket 114 on the housing 1 to allow for electrical connection between the power socket 114 and the circuit board 7. Therefore, during discharging, current output by the battery 3 is transmitted to the circuit board 7, then transmitted to the power socket 114 via the bundles of wires, and finally transmitted to the to-be-charged device to realize discharging of the battery 3. During charging, external current is transmitted to the circuit board 7 via the power socket 114 and the bundles of wires, and then transmitted to the battery 3 to realize charging of the battery 3.

In some embodiments, the housing 1 is provided with a second side rib 133 protruding from an inner side wall of the housing 1. The second side rib 133 abuts against the motherboard mounting member 6. The housing 1 is provided with a bottom rib 134 protruding from an inner bottom wall of the housing 1. A partition 135 is disposed between the bottom rib 134 and the second side rib 133. The partition 135 is connected to the inner bottom wall of the housing 1 and abuts against the motherboard mounting member 6. On the one hand, arrangements of the second side rib 133 and the bottom rib 134 can increase the structural strength of the housing 1, slow down the deformation of the housing 1 when the housing 1 is externally squeezed, or prevent the housing 1 from being deformed, so as to protect the battery 3 and the circuit board 7 from being squeezed when the housing 1 is externally squeezed. On the other hand, the second side rib 133 and the partition 135 are disposed in such a manner that the motherboard mounting member 6 can be stopped by the second side rib 133 and the partition 135 to limit a position of the motherboard mounting member 6 in the housing 1, preventing the motherboard mounting member 6, the circuit board 7, the clamping member 2, and the battery 3 from being shaken or moved as a whole, and thus avoiding collision with the circuit board 7 and the battery 3 to protect the circuit board 7 and the battery 3.

Further, in the present disclosure, since the partition 135 is connected not only to the second side rib 133 and the bottom rib 134 but also to the inner bottom wall of the housing 1, the partition 135 is constrained by the second side rib 133, the bottom rib 134, and the inner bottom wall of the housing 1 when the partition 135 abuts against the motherboard mounting member 6, and the second side rib 133, the bottom rib 134, and the inner bottom wall of the housing 1 can provide a restraining force for the partition 135, in such a manner that the partition 135 is less likely to be damaged by squeezing when the partition 135 is abutted by the motherboard mounting member 6.

When the first side rib 131 and the second side rib 133 exist simultaneously, not only a position of the clamping member 2 in the housing 1 can be limited by the first side rib 131, but also the position of the motherboard mounting member 6 in the housing 1 can be limited by the second side rib 133, in such a manner that a position of the motherboard mounting member 6, the circuit board 7, the clamping member 2, and the battery 3 as a whole in the housing 1 can be better limited, providing a better limiting effect to avoid the collision with the circuit board 7 and the battery 3 to better protect the circuit board 7 and the battery 3.

In some embodiments, the second side rib 133 may have a second guide surface 1331, such as an inclined guide surface or an arc-shaped guide surface. The second guide surface 1331 is mainly configured to guide the motherboard mounting member 6 to be mounted to the predetermined position in the housing 1, such as the bottom of the housing 1. Exemplarily, the housing 1 has a mounting opening at an end of the housing 1, the second side rib 133 may extend in an opening direction of the mounting opening to be connected to the inner bottom wall of the housing 1. The second guide surface 1331 is disposed at a side of the second side rib 133 facing away from the inner bottom wall of the housing 1. During assembly, the motherboard mounting member 6 can be inserted into the housing 1 from the mounting opening, and can be mounted to the bottom of the housing 1 under the guidance of the second guide surface 1331, which can not only prevent the second side rib 133 from blocking and hitting the motherboard mounting member 6 when the motherboard mounting member 6 is inserted into the housing 1 from the mounting opening, but also guide the mounting of the motherboard mounting member 6.

In some embodiments, as illustrated in FIG. 13 to FIG. 16, the motherboard mounting member 6 has a first vent 66 and a heat dissipation hole 67 in communication with the first vent 66. The housing 1 has a second vent 111 in communication with the first vent 66 and the heat dissipation hole 67. The circuit board 7 is provided with a fan 72 and electronic components 73. The fan 72 is configured to form a thermal convection through the first vent 66, the heat dissipation hole 67, and the second vent 111 for heat dissipation for the electronic components 73. In this way, cooling of the electronic components 73 can be realized, avoiding operation of the electronic components 73 in a high temperature environment all the time to avoid the failure of the electronic components 73, ensuring normal operation of the electronic components 73, and thus improving use safety of the energy storage device 100.

When the fan 72 is started to dissipate heat from the electronic components 73, an example is that external gas enters the interior of the housing 1 from the second vent 111 under an action of the fan 72, enters the cavity of the motherboard mounting member 6 through the heat dissipation hole 67, flows through the electronic components 73, takes away the heat of the electronic components 73, and then is discharged from the motherboard mounting member 6 through the first vent 66. Finally, a part of the gas may be discharged from the second vent 111 to outside of the housing 1, and another part of the gas may enter the cavity of the motherboard mounting member 6 through the heat dissipation hole 67 again, achieving heat dissipation for the electronic components 73. In another example, the external gas enters the interior of the housing 1 from the second vent 111 under the action of the fan 72, enters the cavity of the motherboard mounting member 6 through the first vent 66, blows to the electronic components 73 and flows through the electronic components 73, takes away the heat of the electronic components 73, and then is discharged to the outside of the motherboard mounting member 6 from the heat dissipation hole 67. Finally, the part of the gas may be discharged from the second vent 111 to the outside of the housing 1, and the other part may re-enter the cavity of the motherboard mounting member 6 through the first vent 66, achieving the heat dissipation for the electronic components 73.

In the present disclosure, one or a plurality of the heat dissipation holes 67 may be provided. When the plurality of heat dissipation holes 67 is provided, the plurality of heat dissipation holes 67 include a first sub-heat dissipation hole 67a arranged close to the bottom of the battery 3, a second sub-heat dissipation hole 67b arranged close to the top of the battery 3, and a third sub-heat dissipation hole 67c arranged close to a middle part of the battery 3. The plurality of heat dissipation holes 67 is provided. When the fan 72 is started to dissipate the heat from the electronic components 73, gas can enter the cavity of the motherboard mounting member 6 from a plurality of directions or flow out of the motherboard mounting member 6 from the plurality of directions, in such a manner that a flow rate of the gas can be improved and a heat dissipation effect can be improved.

Exemplarily, the first sub-heat dissipation hole 67a and one third sub-heat dissipation hole 67c may also allow the bundles of wires to pass through the cavity of the motherboard mounting member 6. That is, one end of a part of the bundles of wires may pass through the first sub-heat dissipation hole 67a into the cavity of the motherboard mounting member 6 to be electrically connected to the circuit board 7 (such as a first conductive protrusion 74 on the circuit board 7), and one end of another part of the bundles of wires may pass through one third sub-heat dissipation hole 67c into the cavity of the motherboard mounting member 6 to be electrically connected to the circuit board 7 (such as a second conductive protrusion 75 on the circuit board 7).

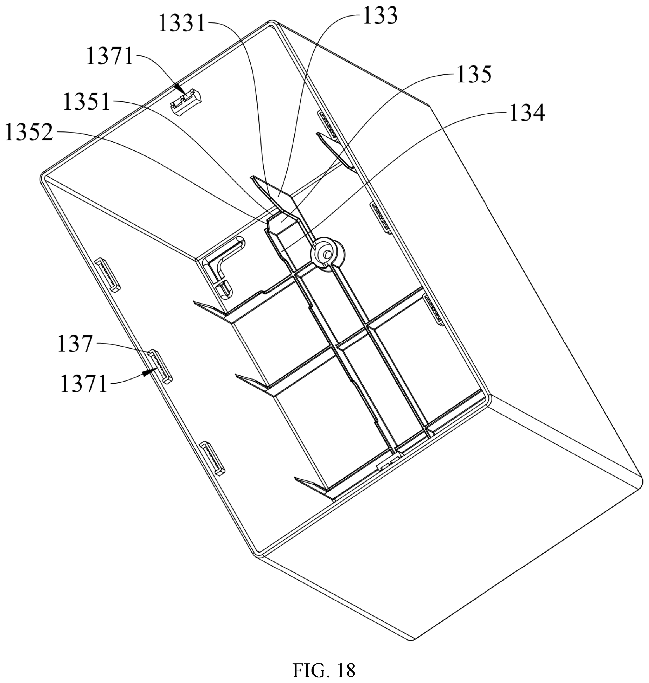

In some embodiments, as illustrated in FIG. 13 to FIG. 18, the first vent 66 is arranged adjacent to a top of the battery 3. A first gap 1a is formed between the motherboard mounting member 6 and an inner side wall of the housing 1. The first side rib 131, the stop plate 132, the second side rib 133, and the partition 135 are all located in the first gap 1a. The first gap 1a is in communication with the second vent 111, the second sub-heat dissipation hole 67b, and the third sub-heat dissipation hole 67c. In addition, a second gap 1b is formed between the motherboard mounting member 6 and an inner bottom wall of the housing 1. The second gap 1b is in communication with the first gap 1a and the first sub-heat dissipation hole 67a. Therefore, when the fan 72 is started, the external gas can enter the interior of the housing 1 from the second vent 111. Then, the gas can not only enter the cavity of the motherboard mounting member 6 through the first gap 1a and the second sub-heat dissipation hole 67b in sequence, but also enter the cavity of the motherboard mounting member 6 through the first gap 1a and the third sub-heat dissipation hole 67c in sequence, and further enter the cavity of the motherboard mounting member 6 through the first gap 1a, the second gap 1b, and the first sub-heat dissipation hole 67a in sequence. In addition, the gas can flow through the electronic components 73 under the action of the fan 72, and then flow out of the motherboard mounting member 6 from the first vent 66, and finally flow out of the housing 1 from the second vent 111 or re-enter the first gap 1a, so as to realize circulation of an air flow inside the housing 1 to achieve the heat dissipation for the electronic components 73. Alternatively, the external gas enters from the second vent 111 and enters the cavity of the motherboard mounting member 6 through the first vent 66, then is blown to the electronic components 73 under the action of the fan 72 and flows through the electronic components 73. Then, the gas can not only be discharged from the second sub-heat dissipation hole 67b and the third sub-heat dissipation hole 67c to the outside of the motherboard mounting member 6, into the first gap 1a, but also from the first sub-heat dissipation hole 67a be discharged to the outside of the motherboard mounting member 6, sequentially into the second gap 1b and the first gap 1a, and finally flow out of the housing 1 from the second vent 111 or re-enter the cavity of the motherboard mounting member 6 through the first vent 66 to realize the circulation of the air flow inside the housing 1, achieving the heat dissipation for the electronic components 73.

It was found that, as an example, the energy storage device 100 is in a discharging mode to illustrate a magnitude of current flowing through the circuit board 7. Two cases are assumed. In a first case where three batteries 3 are connected to each other in series in the related art, the energy storage device 100 can usually realize a power capacity of 1KWH, and in this case a voltage of the three batteries 3 connected in series that is input into the circuit board 7 is (3.2×3) V, and current input into the circuit board 7 is 200W/(3.2×3) V = 20A. In a second case where five batteries 3 are connected in series in the related art, the energy storage device 100 can usually realize a power capacity of 5KWH, and in this case, a voltage of the five batteries 3 connected in series that is input into the circuit board 7 is (3.2×5) V, and current input into the circuit board 7 is 1000W/(3.2×5) V = 50A. However, in the present disclosure, since a single battery 3 is used, a voltage of the battery 3 is 3.2 V, and the energy storage device 100 can realize a power capacity of 1 KWH, voltage input into the circuit board 7 by the battery 3 in the present disclosure is 3.2 V, and the current input into the circuit board 7 is 200 W/3.2 V = 60 A. Therefore, the current flowing through the circuit board 7 in the present disclosure is greater than the current flowing through the circuit board 7 in the related art, and thus heat generated by the circuit board 7 is higher than heat generated in two cases in the related art described above.

In view of this, in the present disclosure, the third gap 1c is formed between the partition 135 and the inner side wall of the housing 1, and at least one end of the bottom rib 134 is spaced apart from the inner side wall of the housing 1. Compared with a manner in which there is no third gap 1c between the partition 135 and the inner side wall of the housing 1, that is, a manner in which the partition 135 is directly connected to the inner side wall of the housing 1, use of materials and the weight of the housing 1 can be reduced, reducing the cost and realizing a lightweight design. Also, when the fan 72 is started to perform heat dissipation, the third gap 1c can also be used as a heat exchange space to increase a heat exchange space of the gas, which is beneficial to improving the heat dissipation effect. In addition, at least one end of the bottom rib 134 is spaced apart from the inner side wall of the housing 1. When the fan 72 is started to dissipate the heat, the gas can enter the third gap 1c without being blocked by an end portion of the bottom rib 134 and without passing over the end portion of the bottom rib 134, facilitating the circulation of the gas, which is beneficial to further improving the heat dissipation effect.

Further, the partition 135 includes a first side surface 1351 facing away from the inner bottom wall and an inclined surface 1352 connected to the first side surface 1351. The inclined surface 1352 is gradually inclined towards the bottom rib 134 from a connection between the inclined surface 1352 and the first side surface 1351 in a direction from the first side surface 1351 to the inner bottom wall. The inclined surface 1352 designed in this way can guide the gas into the second gap 1b through the first gap 1a or into the first gap 1a through the second gap 1b when the fan 72 is in operation, which is beneficial to promoting gas circulation and improving the heat dissipation efficiency during heat dissipation.

In some embodiments, the electronic components 73 include a first functional component 731 having a temperature higher than or equal to 110°C in an operating state. The functional component may be, but is not limited to, at least one of a bidirectional buck-boost converter, a bidirectional isolator, and an AC-DC converter, and the temperature of the first functional component 731 may be, but is not limited to, 110°C, 115.4°C, 118.06°C, 120.9°C, 123.09°C, 125.7°C, 130.5°C, 134.5°C, 139.5°C, etc. The fan 72 has an air outlet facing towards the first functional component 731. The energy storage device 100 further includes a heat dissipation fin 7a. The heat dissipation fin 7a is disposed at a side of the first functional component 731 facing away from the first clamping part 21, and the heat dissipation fin 7a extends in an axial direction of the fan 72. In the present disclosure, the fan 72 has an air outlet facing towards the first functional component 731 having a high temperature in the operating state. In addition, the heat dissipation fin 7a is disposed at the side of the first functional component 731 facing away from the first clamping part 21, enabling rapid cooling of the first functional component 731 having a high temperature in the operating state to avoid safety incidents and enhance operational safety. Also, the heat dissipation fin 7a extends in the axial direction of the fan 72, in such a manner that the gas flowing through the first functional component 731 (that is, gas extracted or blown out by the fan 72) can be effectively guided by the heat dissipation fin 7a, to enable the gas to fully exchange heat with the first functional component 731. In this way, a heat dissipation effect of the first functional component 731 can be improved, realizing a satisfactory heat dissipation effect of the first functional component 731.

In some embodiments, a projection of a circumferential edge of the second sub-heat dissipation hole 67b on an inner side wall of the housing 1 is a first projection ring. A projection of the first functional component 731 on the inner side wall of the housing 1 is a first projection. The first projection is at least partially located within the first projection ring. In this way, the gas exchanged with the first functional component 731 can be quickly discharged out of the motherboard mounting member 6, avoiding a situation where the first functional component 731 fails to cool down rapidly because the air stays around the first functional component 731 for a long time, which is beneficial to improving the heat dissipation effect of the fan 72 on the first functional component 731.

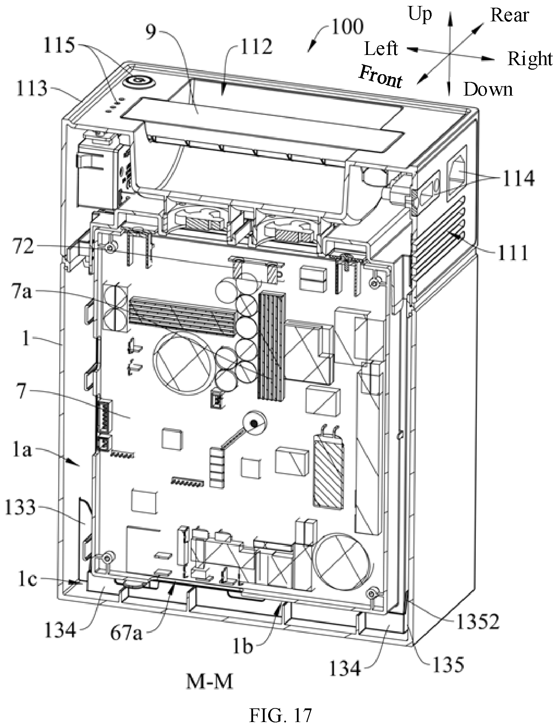

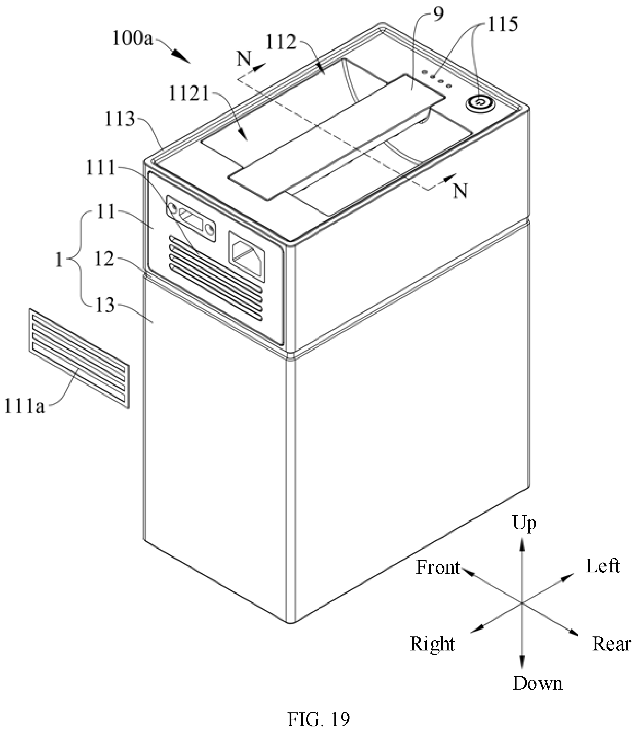

In some embodiments, as illustrated in FIG. 17 and FIG. 19, a waterproof and breathable membrane 111a is disposed at the second vent 111, in such a manner that air inside and outside the housing 1 can be circulated through the second vent 111 to achieve the heat dissipation effect, and also provide waterproof to avoid short circuit of the battery 3 and the circuit board 7 caused by external liquid entering the housing 1 through the second vent 111, ensuring use safety and battery performance of the energy storage device 100.

In some embodiments, as illustrated in FIG. 13, FIG. 17 and FIG. 19, the energy storage device 100 further includes a heat insulating member 8, such as a mica sheet. The heat insulating member 8 is disposed between the circuit board 7 and the first clamping part 21, in such a manner that the heat insulating effect can be realized to reduce or avoid a situation where the heat generated by the battery 3 during thermal runaway spreads to the circuit board 7, preventing fire spreading to the circuit board 7 when the battery 3 catches fire. Exemplarily, the heat insulating member 8 may be a mica sheet or a metal sheet coated with a thermal insulation coating on a surface of the metal sheet. By adopting the above-mentioned heat insulating member 8, the heat spreading to the circuit board 7 after the thermal runaway of the battery 3 can be better isolated, and the heat insulation effect is better. Also, the mica sheet can also avoid electrical breakdown and prevent damage to the circuit board 7. The thermal insulation coating may be mainly made of a thermal insulation material. The thermal insulation material may be, but is not limited to, glass fiber, asbestos, rock wool, silicate, aerogel felt, a vacuum panel, etc., which has a good thermal insulation ability to prevent heat exchange between the battery 3 and the circuit board 7.

Further, the heat insulating member 8 has a second slot 81 at a peripheral edge of the heat insulating member 8. The first clamping part 21 is provided with a second bending part 215 protruding from the first clamping part 21. In particular, the first clamping body 211 is provided with the second bending part 215 protruding from the first clamping body 211. The second bending part 215 passes through the second slot 81, and the second bending part 215 is bendable to abut against the heat insulating member 8, realizing mounting and fixation of the heat insulating member 8 on the first clamping part 21. By adopting the above-described mounting method, mounting and fixation of the heat insulating member 8 is facilitated.

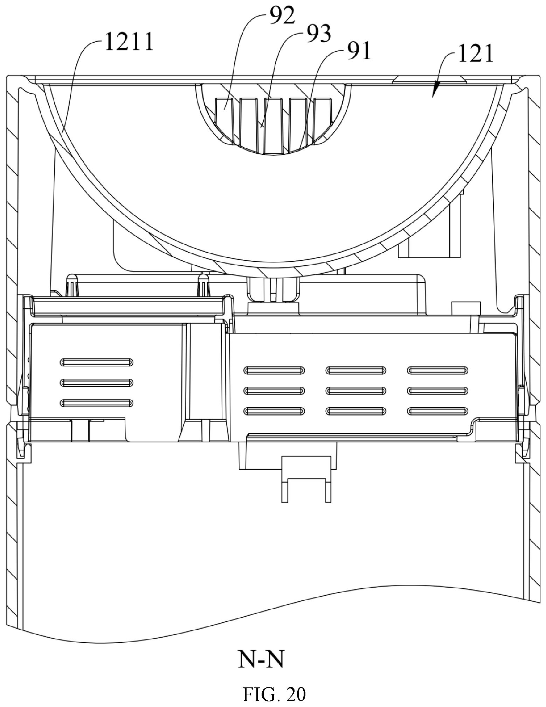

In some embodiments, as illustrated in FIG. 19 and FIG. 20, the energy storage device 100 further includes a grip member 9 connected to the housing 1, in such a manner that when the energy storage device 100 is moved, the grip member 9 can be held to lift the energy storage device 100 to move the energy storage device 100. Therefore, the energy storage device 100 can be more conveniently moved. In addition, the housing 1 has a first groove 112 formed at a top surface of the housing 1. The grip member 9 is at least partially accommodated in the first groove 112. A grip space is formed between the grip member 9 and the first groove 112 and configured to allow a user's hand to access and hold the grip member 9. In a direction opposite to a depth direction of the first groove 112 (for example an upward direction in FIG. 19), a surface of the grip member 9 facing away from the housing 1 is lower than or flush with the top surface of the housing 1. Therefore, when the housing 1 is placed on a tabletop, a countertop, a floor, or other placement surfaces, the housing 1 can be placed upside down, meaning that the top surface of the housing 1 can be placed on the placement surface, allowing the energy storage device 100 to be placed upside down on the placement surface.

In some embodiments, the surface of the grip member 9 facing away from the housing 1 is lower than the top surface of the housing 1. Compared with the manner in which the surface of the grip member 9 facing away from the housing 1 is flush with the top surface of the housing 1, since it is difficult to keep absolute flush between the surface of the grip member 9 facing away from the housing 1 and the top surface of the housing 1, that is, there is a height difference between the surface of the grip member 9 facing away from the housing 1 and the top surface of the housing 1, which may affect stability of the housing 1 placed upside down on the placement surface, a method in which the surface of the grip member 9 facing away from the housing 1 is flush with the top surface of the housing 1 is adopted to improve the stability of the housing 1 placed upside down on the placement surface.

It should be noted that since the clamping member 2, the battery 3, and the adjustment member 4 in the present disclosure are all located inside the housing 1, the housing 1 generally includes at least two shells. For example, the housing 1 includes the top shell 11 and the bottom shell 13 connected to the top shell 11. The accommodation space formed between the top shell 11 and the bottom shell 13 is configured to accommodate the clamping member 2, the battery 3, and the adjustment member 4. Also, since in the present disclosure during assembly, the adjustment member 4 needs to be adjusted to allow the clamping space 23 to be adapted to the size of the battery 3. Usually, the battery 3 and the clamping member 2 are assembled together, and then the bottom of an entirety of the battery 3 and the clamping member 2 is inserted into the internal space of the bottom shell 13 from the opening of the bottom shell 13, and the top shell 11 is finally assembled, which is commonly understood as forward mounting of the battery 3. However, since the internal space of the bottom shell 13 is usually much deeper than the internal space of the top housing 11 in the height direction of the battery 3, when the bottom of the entirety of the battery 3 and the clamping member 2 is inserted into the internal space of the bottom shell 13 from the opening of the bottom shell 13, if the entirety of the battery 3 and the clamping member 2 is released, there is still a predetermined spacing between the bottom of the entirety of the battery 3 and the clamping member 2 and the inner bottom surface of the bottom shell 13, in such a manner that the entirety of the battery 3 and the clamping member 2 may collide with the bottom shell 13 to easily cause some damage to the battery 3, the clamping member 2, and the bottom shell 13. Therefore, in the present disclosure, the battery 3 and the clamping member 2 are usually assembled together, and then the top of the entirety of the battery 3 and the clamping member 2 is connected to the top shell 11, and finally the bottom shell 13 is arranged around the outer periphery of the entirety of the battery 3 and the clamping member 2 to enable the bottom shell 13 to be connected to the top shell 11, which is commonly understood as reverse mounting of the battery 3. During reverse mounting, usually the top surface of the top housing 11 (that is, the top surface of the housing 1) is needed to be placed on the placement surface. Therefore, the first groove 112 is disposed on the top surface of the housing 1 to accommodate a part of the grip member 9 or the whole grip member 9, in such a manner that the top surface of the grip member 9 facing away from the housing 1 can be lower than or flush with the top surface of the housing 1, and the housing 1 can be placed upside down and smoothly placed on the placement surface. In this way, assembly of the entirety of the battery 3 and the clamping member 2 into the top housing 11 can be facilitated smoothly.

Further, when the grip member 9 is held to lift the energy storage device 100, since the circuit board 7 is located at a side of the battery 3, and weight of the battery 3 is much larger than a weight of the circuit board 7, resulting in a large difference between the weight of the battery 3 and the weight of the circuit board 7, legs of the user cannot be rubbed when the energy storage device 100 is lifted for walking, and thus the walking may not be affected.

When the grip member 9 is disposed on a top of the housing 1, the second vent 111 is preferably disposed at a side wall of the housing 1, in such a manner that when the grip member 9 is gripped to lift the energy storage device 100, hot gas discharged through the second vent 111 can be prevented from contacting the user's hands, preventing the user's hands from getting burned or wetted.

In some embodiments, the surface of the grip member 9 facing away from the housing 1 is planar, which can ensure that the energy storage device 100 can be more stably laid flat on the placement surface when the energy storage device 100 is placed upside down.

In some embodiments, the housing 1 is provided with an annular protrusion 113 at the top surface of the housing 1. The annular protrusion 113 is arranged around an outer periphery of the first groove 112, and in a protruding direction of the annular protrusion 113, the surface of the grip member 9 facing away from the housing 1 is lower than a surface of the annular protrusion 113 facing away from the housing 1. In this way, when the housing 1 is placed upside down, the housing 1 can be smoothly placed on the placement surface. In addition, compared with the manner in which the surface of the grip member 9 facing away from the housing 1 is flush with the surface of the annular protrusion 113 facing away from the housing 1, since it is difficult to keep absolute flush between the surface of the grip member 9 facing away from the housing 1 and a surface of the annular protrusion 113 facing away from the housing 1, that is, there is a height difference between the surface of the grip member 9 facing away from the housing 1 and the surface of the annular protrusion 113 facing away from the housing 1, which may affect the stability of the housing 1 placed upside down on the placement surface, a method in which the surface of the grip member 9 facing away from the housing 1 is lower than the top surface of the housing 1 is adopted to improve the stability of the housing 1 placed upside down on the placement surface.

As an example, the annular protrusion 113 may be located at an edge of the top surface of the housing 1. In this case, an outer circumferential surface of the annular protrusion 113 is substantially flush with an outer side surface of the housing 1. As another example, the annular protrusion 113 may be located between the first groove 112 and the outer side surface of the housing 1.

In some embodiments, as illustrated in FIG. 19 and FIG. 20, two ends of the grip member 9 in a first direction (for example a left-right direction in FIG. 19) of the grip member 9 are connected to the housing 1. The first groove 112 is an arc-shaped groove extending in the first direction of the grip member 9. In addition, the first groove 112 has a groove wall surface 1121 facing towards the grip member 9. The groove wall surface 1121 is a cylindrical surface arranged around an axis parallel to the first direction, and a cross-section of the groove wall surface 1121 taken along a plane perpendicular to the first direction has an arc-shaped profile. In this way, when the user's hands reach into the grip space to grip the grip member 9, the groove wall surface 1121 of the first groove 112 can be prevented from blocking the user's hands to make the grip member 9 inconvenient to be gripped, facilitating reach of the users hands into the grip space to hold the grip member 9.

In some embodiments, the grip member 9 has a circumferential side surface 91 facing towards the groove wall surface 1121. The circumferential side surface 91 is a cylindrical surface arranged around the axis parallel to the first direction, and the circumferential side surface 91 is parallel to the groove wall surface 1121. In this way, reach of the user's hands into the grip space to hold the grip member 9 can be facilitated. Also, when the user's hand holds the grip member 9, the grip member 9 can be adapted to a curved shape of the user's hand to be well fitted to the user's hand to facilitate the user's hand to hold the grip member 9, improving comfort of the user when holding the grip member 9.

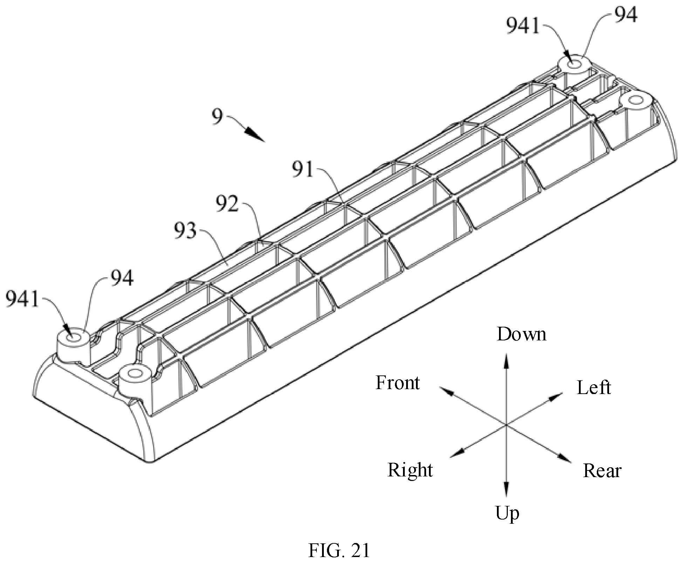

In some embodiments, as illustrated in FIG. 20 and FIG. 21, the grip member 9 is provided with a plurality of first ribs 92 and a plurality of second ribs 93 at a surface of the grip member facing towards the groove wall surface 1121. The plurality of first ribs 92 is arranged at intervals in the first direction. The plurality of second ribs 93 is arranged at intervals in a second direction perpendicular to the first direction, and each of the plurality of second ribs 93 is arranged to intersect with the plurality of first ribs 92. The circumferential side surface 91 is formed by surfaces of the plurality of first ribs 92 facing towards the groove wall surface 1121. And/or, the circumferential side surface 91 is formed by surfaces of the plurality of second ribs 93 facing towards the groove wall surface 1121. The second direction is perpendicular to the first direction. In addition, the second direction is perpendicular to the depth direction of the first groove 112. By forming the plurality of first ribs 92 arranged in the first direction and the plurality of second ribs 93 arranged in the second direction on the surface of the grip member 9 facing towards the groove wall surface 1121, not only structural strength of the grip member 9 can be strengthened, but also a friction force between the user's hand and the grip member 9 can be increased to provide slip resistance, avoid a situation where, after the user's hand holds the grip member 9 to lift the energy storage device 100, the grip member 9 is accidentally separated from the user's hand, causing the energy storage device 100 to fall. Further, this design facilitates a demolding process.

In some embodiments, the grip member 9 has a second threaded connection hole 941 on the surface of the grip member 9 facing towards the groove wall surface 1121. The housing 1 also has a through hole 117. The fastener such as the bolts and the screw sequentially passes through the through hole 117 and the second threaded connection hole 941. In addition, the fastener is also threadedly connected to the second threaded connection hole 941 to realize mounting and fixation between the grip member 9 and the housing 1, enabling connection between the grip member 9 and the housing 1 to be relatively firm, and thus resulting in convenient mounting and disassembly, strong practicability, and convenient operation. Simultaneously, since a nut of the fastener is located inside the housing 1, the grip member 9 has no connection hole on a surface of the grip member 9 exposed outside the first groove 112, in such a manner that liquid such as rain water can be prevented from entering the housing 1 from the mounting hole, and thus waterproof performance of the housing 1 can be improved.

For example, the grip member 9 is provided with a mounting post 94 on the surface of the grip member 9 facing towards the groove wall surface 1121. The mounting post 94 has the aforementioned second threaded connection hole 941 on an end surface of the mounting post 94 facing towards the groove wall surface 1121. Therefore, a thickness of the entire grip member 9 in the depth direction of the first groove 112 is not required to be increased, but a thickness of the mounting post 94 in the depth direction of the first groove 112 can be only increased. The second threaded connection hole 941 can be deepened by local thickening, so as to increase a connection area between the second threaded connection hole 941 and the fastener. In this way, connection stability between the grip member 9 and the housing 1 can be further improved, and also a weight of the grip member 9 can be reduced, and thus the lightweight and thin design of the grip member 9 can be facilitated.

Further, the grip member 9 is provided with mounting posts 94 at two ends of the grip member 9 in a first direction of the grip member 9. In addition, the grip member 9 is provided with a plurality of mounting posts 94 at each of two ends of the grip member 9 in the first direction of the grip member 9, such as two mounting posts 94, three mounting posts 94, or four mounting posts 94. In this way, the grip member 9 can be mounted and fixed to the housing 1 by a plurality of fasteners, further improving the connection stability between the grip member 9 and the housing 1.

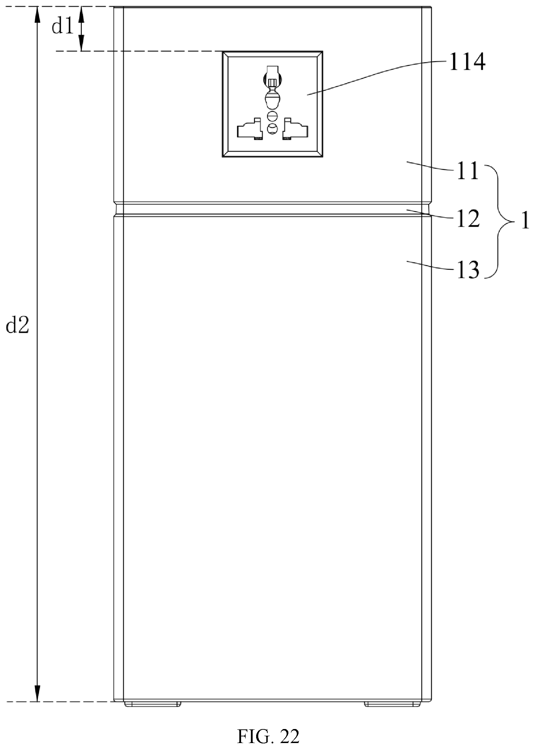

In some embodiments, as illustrated in FIG. 17 and FIG. 22, the housing 1 has a power socket 114 at a side wall of the housing 1 arranged in the first direction, which can be connected to a power cord. In this way, an external power source can be connected through the power cord to charge the battery 3, and/or an external to-be-charged device can be connected through the power cord to charge the to-be-charged device. In addition, a projection of the grip member 9 on the side wall of the housing 1 arranged in the first direction is a second projection. The second projection at least partially overlaps with the power socket 114 in the depth direction of the first groove 112. Therefore, when the power cord is plugged and unplugged, the user can hold the grip member 9 with one hand and hold the power cord with another hand to insert the power cord into a power connector or unplug the power cord from the power socket 114. In this case, a force of the user's hand holding the grip member 9 can counteract a force of plugging and unplugging the power cord, which can facilitate the plugging and unplugging of the power cord.

In some embodiments, the power socket 114 is located at a top of the housing 1 to enable the power socket 114 to be arranged close to the grip member 9. And/or, in the depth direction of the first groove 112, a distance between the power socket 114 and the top surface of the housing 1 is d1, and a distance between the top surface of the housing 1 and a bottom surface of the housing 1 is d2, where d1/d2 ranges from 1/25 to 4/25, for example, d1/d2 = 1/25, 3/50, 2/25, 1/10, 3/25, 7/50, or 4/25, to allow a distance between the grip member 9 and the power socket 114 to be small. Through the above design, the distance between the power socket 114 and the grip member 9 is smaller compared to disposing the power socket 114 at the bottom of the housing 1. When the power cord is plugged and unplugged, a force can be better exerted to pull the power cord out of the power socket 114 or insert the power cord into the power socket 114.

Exemplarily, the power socket 114 may include three sub-power sockets. One of the three sub-power sockets is configured to enable the energy storage device 100 to charge the to-be-charged device. The remaining two sub-power sockets are configured to charge the energy storage device 100. One of the remaining two sub-power sockets is a mains charging socket and another of the remaining two sub-power sockets is a photovoltaic charging socket. In this way, charging and discharging of the energy storage device 100 can be facilitated.

In some embodiments, as illustrated in FIG. 19 and FIG. 20 again, the housing 1 is provided with a second functional component 115 at the top surface of the housing 1. The second functional component 115 is electrically connected to the circuit board 7. In addition, the second functional component 115 is located inside the annular protrusion 113, and in a protruding direction (for example the upward direction in FIG. 19) of the annular protrusion 113, a surface of the second functional component 115 facing away from the housing 1 is lower than a surface of the annular protrusion 113 facing away from the housing 1. In this way, the second functional component 115 being in contact with the placement surface or relative sliding between the second functional component 115 and the placement surface can be avoided when the housing 1 is placed upside down on the placement surface, reducing wear of the second functional component 115.

In another exemplary embodiment of the present disclosure, the second functional component 115 may be, but is not limited to, at least one of an indicator light or a power button. When the second functional component 115 is the indicator light, the plurality of indicator lights is provided, which may be configured to indicate a current power status and a charging state of the energy storage device 100. For example, when there are four indicator lights, and when the energy storage device 100 is not charged, all four indicator lights are on, a power of the energy storage device 100 in this case is in a substantially full state. Similarly, the fewer indicator lights that are on, the lower the power of the energy storage device 100, until none of the four indicator lights are on, indicating that in this case the energy storage device 100 has zero power. When charging the energy storage device 100, it is assumed that at the beginning, four indicator lights flash sequentially. When a predetermined amount of power is reached, one indicator light is always on, and the remaining three indicator lights flash sequentially until the four indicator lights are always on, meaning that the energy storage device 100 is fully charged. When the second functional component 115 is the power button, the circuit board 7 can be controlled by pressing the power button to realize a corresponding function. For example, the circuit board 7 can be controlled to control power-on and power-off of the energy storage device 100 by pressing the power button. By making the surface of the second functional component 115 facing away from the housing 1 be lower than the surface of the annular protrusion 113 facing away from the housing 1, the power button can be prevented from being pressed all the time when the housing 1 is placed upside down on the placement surface to lead to switch of the energy storage device 100 between the power-on and the power-off all the time, and thus a service life of the energy storage device 100 can be ensured.

In actual production, a plurality of energy storage devices 100 is mass-produced, or in actual purchase, the user may purchase the plurality of energy storage devices 100 as a backup of the battery 3. To save a space, the plurality of energy storage devices 100 is typically stacked vertically.

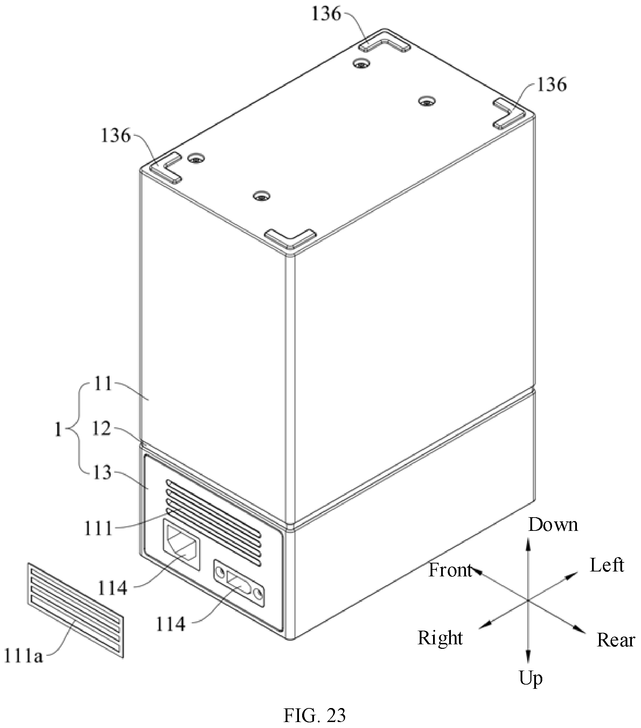

To improve stability of two adjacent stacked energy storage devices 100, in some embodiments, as illustrated in FIG. 19 and FIG. 23, the housing 1 is provided with a limit protrusion 136 at the bottom surface of the housing 1. A projection of the annular protrusion 113 located at a top surface of the housing 1 on a bottom surface of the housing 1 is a second projection ring. A projection of the limit protrusion 136 on the bottom surface of the housing 1 is a third projection. The third projection is located inside the second projection ring, and the third projection has an outer contour abutting against an inner contour of the second projection ring. In this way, when the plurality of energy storage devices 100 are stacked vertically, for any two adjacent energy storage devices 100, a limit protrusion 136 of the upper energy storage device 100 can be engaged with an annular protrusion 113 of the lower energy storage device 100 to allow any two adjacent stacked energy storage devices 100 to be stably stacked together, preventing the upper energy storage device 100 from falling off.

In another exemplary embodiment of the present disclosure, a plurality of limit protrusions 136 may be provided. The plurality of limit protrusions 136 is arranged at intervals in the circumferential direction of the housing 1, and a third projection formed by each limit protrusion 136 is located inside the second projection ring. In addition, the third projection formed by each limiting protrusion 136 abuts against the inner contour of the second projection, which can further improve stability of two adjacent energy storage devices 100 stacked together. Exemplarily, when the housing 1 in the present disclosure is in a rectangular solid shape, the top surface and the bottom surface thereof are both rectangular surfaces. The annular protrusion 113 is a rectangular annular structure located at an edge of the top surface. Four limit protrusions 136 are provided, and one limit protrusion 136 thereof is located at one corner of the bottom surface. All four limit protrusions 136 are engaged with the annular protrusion 113. Further, the limit protrusion 136 may have an L-shaped structure, including a first part and a second part that are connected to each other at an angle. The first part extends along a short side of the bottom surface, and the second part extends along a long side of the bottom surface, increasing a contact area between the annular protrusion 113 and the limit protrusion 136, and further facilitating improving the stability of two adjacent stacked energy storage devices 100.

In some embodiments of the present disclosure, the housing 1 may include a top shell 11 and a bottom shell 13 connected to the top shell 11. The first clamping part 21 and the second clamping part 22 are disposed inside the bottom shell 13, and the first clamping part 21 and the second clamping part 22 are connected to the top shell 11. The adjustment member 4 is located inside the bottom shell 13. By disposing the housing 1 as a housing structure including the top shell 11 and the bottom shell 13, assembling parts such as the battery 3, the first clamping part 21, the second clamping part 22, and the adjustment member 4 into the housing 1 can be facilitated. In addition, since the housing 1 only includes the top shell 11 and the bottom shell 13, a quantity of parts is reduced, making the structure relatively simple and easier to mount, and also reducing costs.

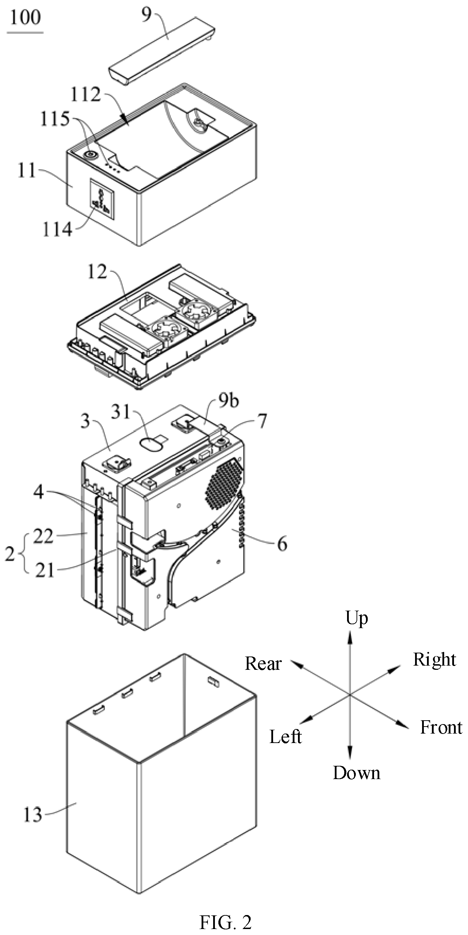

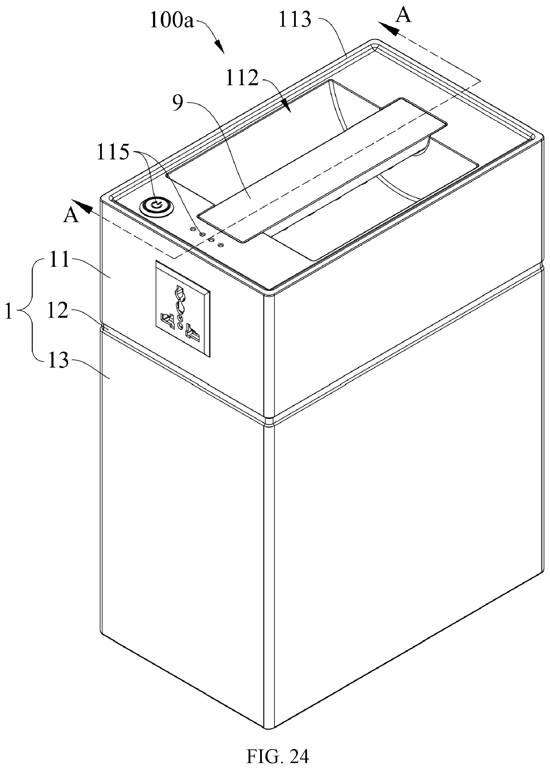

In other embodiments, as illustrated in FIG. 2 and FIG. 24, the housing 1 may include a top shell 11, an intermediate shell 12 and a bottom shell 13. The intermediate shell 12 is located between the top shell 11 and the bottom shell 13. The intermediate shell 12 is connected to the top shell 11 and the bottom shell 13. The first clamping part 21 and the second clamping part 22 are disposed inside the bottom shell 13. The first clamping part 21 and the second clamping part 22 are connected to the intermediate shell 12. The adjustment member 4 is located inside the bottom shell 13. Compared with a manner in which the housing 1 includes the top shell 11 and the bottom shell 13, the intermediate shell 12 connected to the top shell 11 is additionally provided, and components such as the first clamping part 21, the second clamping part 22, and the bottom shell 13 are connected to the intermediate shell 12, respectively, the intermediate shell 12 can bear part of the force acting on the top shell 11, increasing structural strength of the top shell 11 and a bearing capacity of the top shell 11 when the energy storage device 100 is lifted, and thus prolonging a service life of the top shell 11.

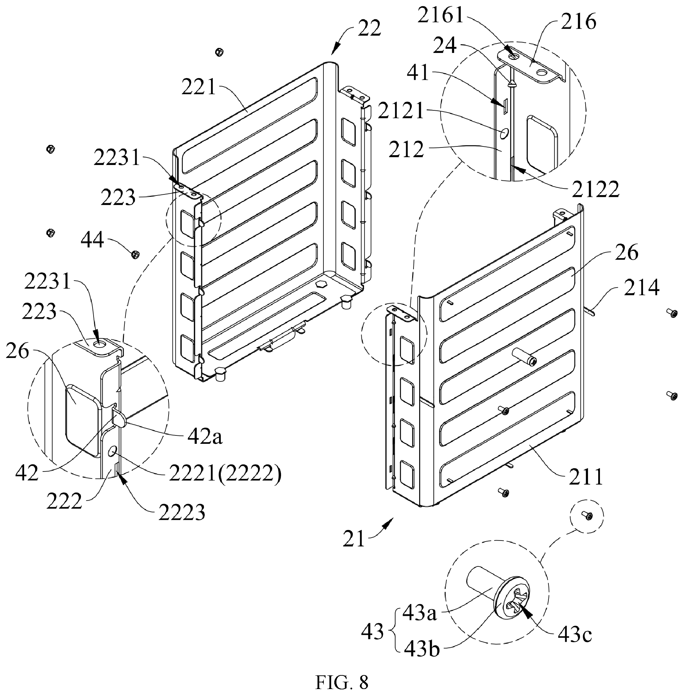

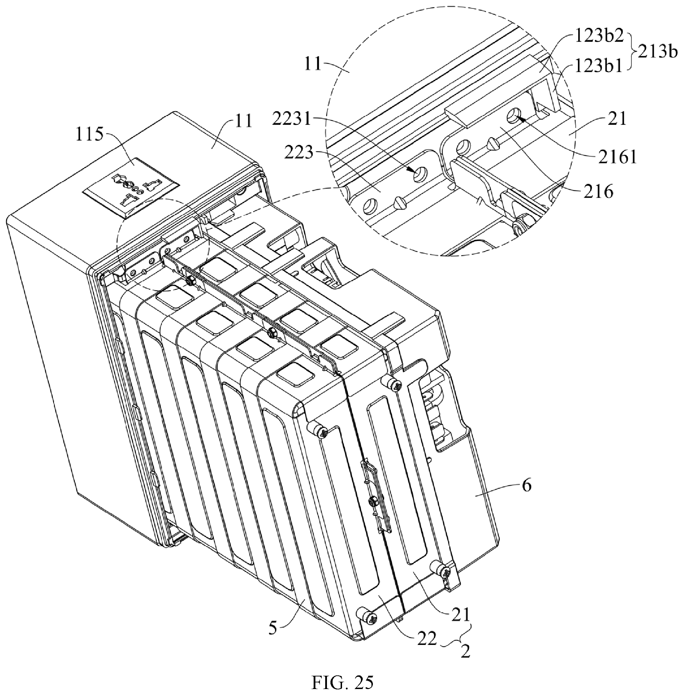

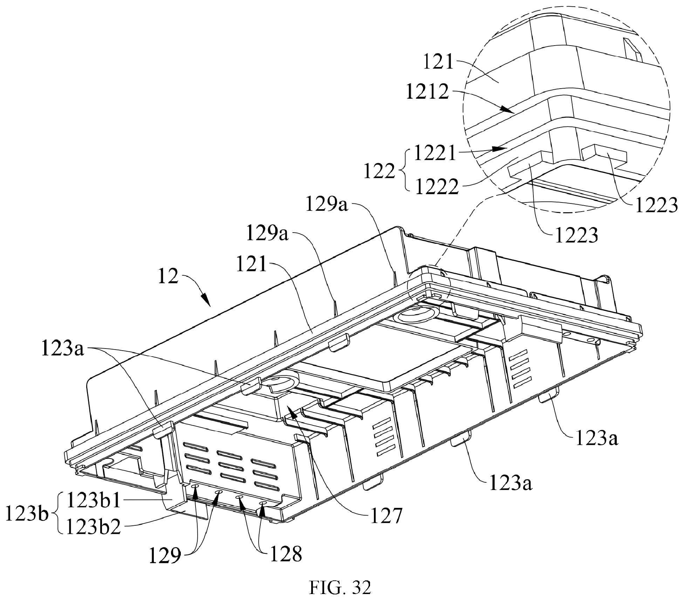

In some embodiments, as illustrated in FIG. 8, FIG. 9, FIG. 10, FIG. 25, FIG. 31, and FIG. 32, the first clamping part 21 further includes a first mounting flange 216 connected to the first clamping body 211. The first mounting flange 216 has a first mounting hole 2161. The intermediate shell 12 further has a second mounting hole 128. The second mounting hole 128 is a threaded hole. A first fastener such as the bolt and the screw sequentially passes through the first mounting hole 2161 and the second mounting hole 128, and the first fastener are also threadedly connected to the second mounting hole 128 to allow for mounting and fixation between the first clamping part 21 and the intermediate shell 12. Similarly, the second clamping part 22 further includes a second mounting flange 223 connected to the second clamping body 221. The second mounting flange 223 has a third mounting hole 2231. The intermediate shell 12 also has a fourth mounting hole 129. The fourth mounting hole 129 is a threaded hole. A second fastener such as the bolt and the screw sequentially passes through the third mounting hole 2231 and the fourth mounting hole 129, and the second fastener is also threadedly connected to the fourth mounting hole 129 to allow for mounting and fixation between the second clamping part 22 and the intermediate shell 12.

The first clamping part 21 and the second clamping part 22 are threadedly connected to the intermediate shell 12 by a fastener such as a screw or a bolt. In this way, connection between the clamping member 2 and the intermediate shell 12 can be relatively firm to ensure that the intermediate shell 12 can share part of the force from the clamping member 2 and the battery 3, improving a load-bearing capacity of the intermediate shell 12, and thus resulting in convenient mounting and disassembly, strong practicability and convenient operation.

Exemplarily, the first mounting flange 216 has a plurality of first mounting holes 2161. Correspondingly, the intermediate shell 12 has a plurality of second mounting holes 128. A projection ring of a circumferential edge of the second mounting hole 128 on the first mounting flange 216 coincides with a circumferential edge of the first mounting hole 2161. A first fastener sequentially passes through the first mounting hole 2161 and the second mounting hole 128, and the first fastener is threadedly connected to the second mounting hole 128, in such a manner that the first clamping part 21 can be mounted and fixed to the intermediate shell 12 by the plurality of first fasteners, further improving the connection stability between the first clamping part 21 and the intermediate shell 12.

Similarly, the second mounting flange 223 has a plurality of third mounting holes 2231. Correspondingly, the intermediate shell 12 has a plurality of fourth mounting holes 129. A projection ring of a circumferential edge of the fourth mounting hole 129 on the second mounting flange 223 coincides with a circumferential edge of the third mounting hole 2231. A second fastener sequentially passes through the third mounting hole 2231 and the fourth mounting hole 129, and the second fastener is threadedly connected to the fourth mounting hole 129, in such a manner that the second clamping part 22 can be mounted and fixed to the intermediate shell 12 by the plurality of second fasteners, further improving the connection stability between the second clamping part 22 and the intermediate shell 12.

In some embodiments, as illustrated in FIG. 23 to FIG. 29, the intermediate shell 12 is embedded inside the top shell 11, and the intermediate shell 12 is provided with a stop protrusion 121 protruding from an outer circumferential surface of the intermediate shell 12. The stop protrusion 121 is arranged around the intermediate shell 12 in a circumferential direction of the intermediate shell 12, and the stop protrusion 121 has a first stop surface 1211 facing towards the top shell 11. The first stop surface 1211 abuts against an end face of the top shell 11. It should be understood that a state illustrated in FIG. 23 can be understood as a state in which the housing 1 is placed upside down on the placement surface. A state illustrated in FIG. 24 can be understood as a state in which the housing 1 is placed right side up on the placement surface. Usually, when the housing 1 is placed on the placement surface, the housing 1 is placed right side up on the placement surface. That is, the bottom surface of the bottom shell 13 is in contact with the placement surface. Therefore, liquid on the housing generally flows from top to bottom. For example, on a rainy day, when the rain falls and drips to the housing, rain on the top shell usually flows from top to bottom under an action of gravity. Even if the rain flows to a gap between the top shell 11 and the first stop surface 1211, since the intermediate shell 12 is embedded inside the top shell 11, a part of the intermediate shell 12 in the top shell 11 forms an upward barrier, and thus the rain cannot go up along the part of the intermediate shell 12 embedded inside the top shell 11 under the action of gravity, realizing a waterproof design. Therefore, with the intermediate shell 12 provided with the stop protrusion 121 protruding from the outer circumferential surface of the intermediate shell 12, the intermediate shell 12 embedded inside the top shell 11, and the first stop surface 1211 of the stop protrusion 121 abutting against the end face of the top shell 11, the waterproof design of the housing 1 can be realized.

Exemplarily, in a direction perpendicular to the first stop surface 1211, a length of the part of the intermediate shell 12 embedded inside the top shell 11 ranges from 0.3 cm to 1. 5 cm, such as 0.3 cm, 0.4 cm, 0.5 cm, 0.6 cm, 0.65 cm, 0.7 cm, 0.75 cm, 0.8 cm, 0.85 cm, 0.9 cm, 1.0 cm, 1.1 cm, 1.2 cm, 1.3 cm, 1.4 cm, or 1.5 cm. By controlling the length of the part of the intermediate shell 12 embedded inside the top shell 11 to be in the above range, the length of the part of the intermediate shell 12 embedded inside the top shell 11 is avoided from being too short, to ensure that the part of the intermediate shell 12 embedded in the top shell 11 can have a waterproof effect of blocking rainwater.

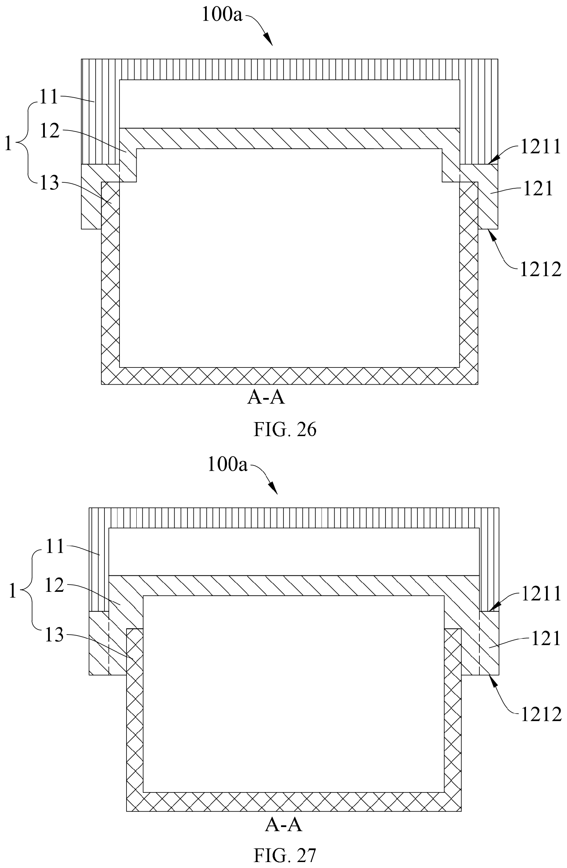

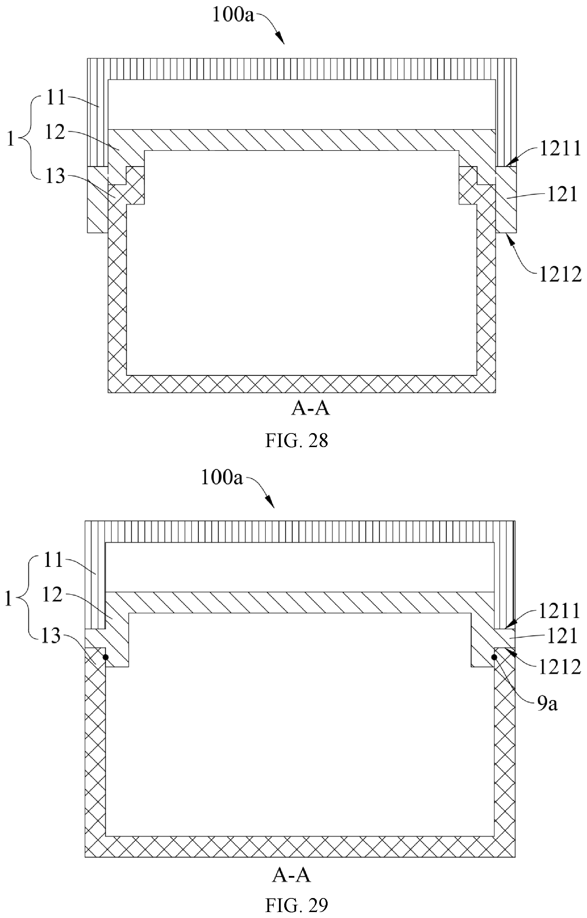

In another exemplary embodiment of the present disclosure, as illustrated in FIG. 26 to FIG. 28, the bottom shell 13 is embedded in the stop protrusion 121 and/or in the intermediate shell 12. That is, the bottom shell 13 may be embedded only in the stop protrusion 121 and does not extend into the intermediate shell 12 (as illustrated in FIG. 26), or may be embedded only in the intermediate shell 12 (as illustrated in FIG. 27), or may be partially located in the intermediate shell 12, partially located inside the stop protrusion 121 (as illustrated in FIG. 28). The stop protrusion 121 further has a second stop surface 1212 facing towards the bottom surface of the bottom shell 13. As mentioned above, usually when the energy storage device 100 is placed on the placement surface, the energy storage device 100 is placed right side up on the placement surface. That is, the bottom surface of the bottom shell 13 is in contact with the placement surface, and thus the liquid on the housing 1 generally flows from top to bottom. For example, when rainwater falls and drips to the housing on a rainy day, the rainwater on the top shell usually flows from top to bottom under the action of gravity. Even if the rainwater flows into a gap between the second stop surface 1212 and the bottom shell 13, since the bottom shell 13 is embedded in the intermediate shell 12 and/or the stop protrusion 121, a part of the bottom shell 13 in the intermediate shell 12 and/or the stop protrusion 121 forms an upward barrier, the rainwater cannot go up along the part of the bottom shell 13 embedded in the intermediate shell 12 and/or the stop protrusion 121 under the action of gravity, realizing the waterproof design.

In another exemplary embodiment of the present disclosure, as illustrated in FIG. 29, the stop protrusion 121 further has a second stop surface 1212 facing towards a bottom surface of the bottom shell 13. The intermediate shell 12 is embedded inside the bottom shell 13. The stop protrusion 121 is located outside the bottom shell 13, and the second stop surface 1212 abuts against an end face of the bottom shell 13. The energy storage device further includes a seal 9a disposed at the outer circumferential surface of the intermediate shell 12. The seal 9a is arranged around the intermediate shell 12 in the circumferential direction of the intermediate shell 12. In addition, the seal 9a is sealingly abutted against an inner side wall of the bottom shell 13. Therefore, the seal 9a is pressed by the inner side wall of the bottom shell 13 and then deformed under an action of a pressing force to seal a connection gap between the inner side wall of the bottom shell 13 and the outer circumferential surface of the intermediate shell 12, achieving a watertight seal, and thus improving waterproofing performance of the housing 1.

In another exemplary embodiment of the present disclosure, the seal 9a has elasticity. For example, the seal 9a may be a seal ring such as a silicone ring, a rubber ring, a plastic ring, or a foam ring, or a sealant.

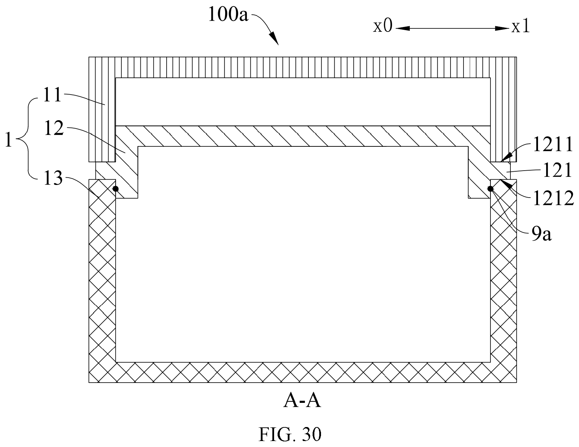

In some embodiments, as illustrated in FIG. 30, the intermediate shell 12 has an end embedded inside the top shell 11, and another end embedded inside the bottom shell 13. The stop protrusion 121 is located between the top shell 11 and the bottom shell 13. The outer circumferential surface of the top shell 11 is flush with the outer circumferential surface of the bottom shell 13 and the outer circumferential surface of the intermediate shell 12 is lower than the outer circumferential surface of the top shell 11 in a protruding direction (such as an x0-x1 direction in FIG. 30) in which the stop protrusion 121 protrudes relative to the outer circumferential surface of the intermediate shell 12.

With the intermediate shell 12 provided with the stop protrusion 121 protruding from the outer circumferential surface of the intermediate shell 12, steps can be formed at two sides of the intermediate shell 12. Therefore, the top shell 11 and the bottom shell 13 can be fitted and connected to the steps at two sides of the intermediate shell 12, in such a manner that a path through which external liquid such as rain droplets enters the housing 1 can be prolonged, and thus the waterproofing performance of the housing 1 can be improved. Furthermore, in the protruding direction of the stop protrusion 121 protrudes relative to the outer circumferential surface of the intermediate shell 12, the outer circumferential surface of the top shell 11 is flush with the outer circumferential surface of the bottom shell 13, and the outer circumferential surface of the intermediate shell 12 is lower than the outer circumferential surface of the top shell 11. Therefore, even if the energy storage device 100 is placed outdoors and encounters rain, the rainwater may flow along the outer circumferential surface of the top shell 11 towards the bottom shell 13. In addition, when the rainwater reaches the edge of the top shell 11, the rainwater can drop directly onto the outer circumferential surface of the bottom shell 13 under the action of gravity and continue to flow along the outer circumferential surface of the bottom shell 13, which prevents the rainwater from seeping into the housing 1 from a connection between the top shell 11 and the intermediate shell 12 and a connection between the bottom shell 13 and the intermediate shell 12, further enhancing the waterproof performance of the housing 1.

In some embodiments, as illustrated in FIG. 30 to FIG. 32, the intermediate shell 12 is provided with a second step structure 122 at an end of the intermediate shell 12 embedded inside the bottom shell 13. The second step structure 122 includes a first step surface 1221 and a second step surface 1222 that are connected to each other at an angle. The first step surface 1221 has a same orientation as the second stop surface 1212. The second step surface 1222 has a same orientation as the outer circumferential surface of the intermediate shell 12. In addition, the second step surface 1222 is provided with a plurality of locking protrusions 1223 arranged at intervals in the circumferential direction of the intermediate shell 12. The plurality of the locking protrusions 1223 is spaced apart from the first step surface 1221. The seal 9a is embedded between the first step surface 1221 and the plurality of locking protrusions 1223. The second step structure 122 is provided, and the locking protrusion 1223 protrudes from the second step surface 1222, to define a mounting position of the seal 9a by using the locking protrusion 1223 cooperating with the first step surface 1221 and the second step surface 1222, which not only provides positioning and limit for the mounting of the seal 9a to facilitate mounting of the seal 9a, but also when the seal 9a is deformed under a pressure force from the bottom shell 13 and the intermediate shell 12, the first step surface 1221 and the locking protrusion 1223 can constrain deformation of the seal 9a to prevent the seal 9a from deforming significantly in a direction from the first step surface 1221 to the locking protrusion 1223, ensuring that the seal 9a primarily deforms in a direction perpendicular to the second step surface 1222 to ensure that the seal 9a to be more tightly attached to the inner side wall of the bottom shell 13, thus achieving a better sealing effect.

Further, with the second step structure 122, the path through which external liquid such as rain droplets enters the housing 1 can be further extended, and thus the waterproof performance of the housing 1 can be improved.

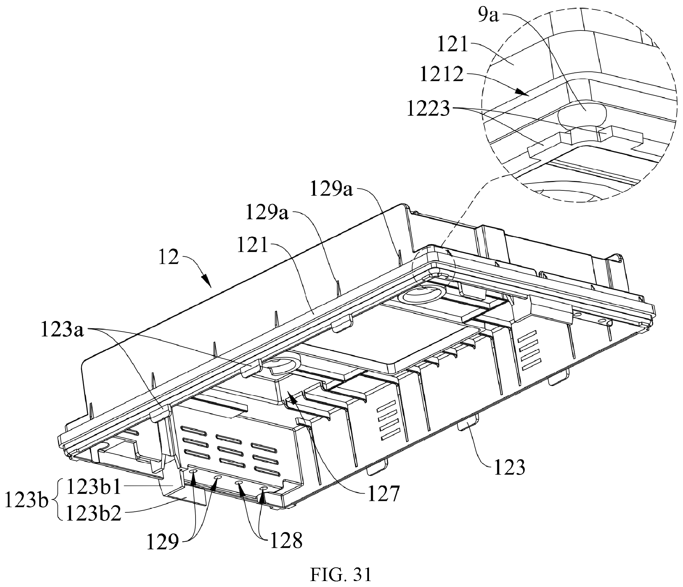

In some embodiments, as illustrated in FIG. 31 to FIG. 33, the first stop surface 1211 has a second groove 1211a, which, as an example, may be an annular groove extending in the circumferential direction of the intermediate shell 12. With the second groove 1211a, even if the rainwater flows into the gap between the top shell 11 and the first stop surface 1211, the rainwater may flow into the second groove 1211a under the action of gravity to allow the rainwater to be temporarily stored in the second groove1211a, further improving the waterproof effect of the housing 1.

In some embodiments, the intermediate shell 12 is provided with a second reinforcing rib 129a at the outer circumferential surface of the intermediate shell 12. The second reinforcing rib 129a is connected to the first stop surface 1211, and the second reinforcing rib 129a is located inside the top shell 11. Setting of the second reinforcing rib 129a contributes to enhancing structural strength of the intermediate shell 12 and improving the load-bearing capacity of the intermediate shell 12.

Exemplarily, the second reinforcing rib 129a is partially located in the second groove 1211a, in such a manner that the second groove 1211a can be divided into at least two relatively independent sub-grooves, so as to prevent the rainwater flowing into the second groove 1211a from different positions from being present in the different sub-grooves, which can prevent the rainwater flowing into the second groove 1211a from different positions from randomly flowing and spreading in the second groove, and thus can improve the waterproof effect of the housing to some extent.

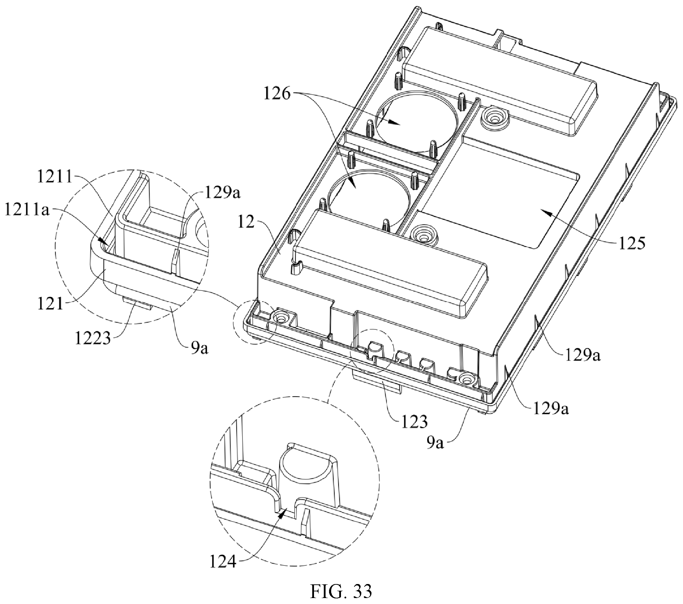

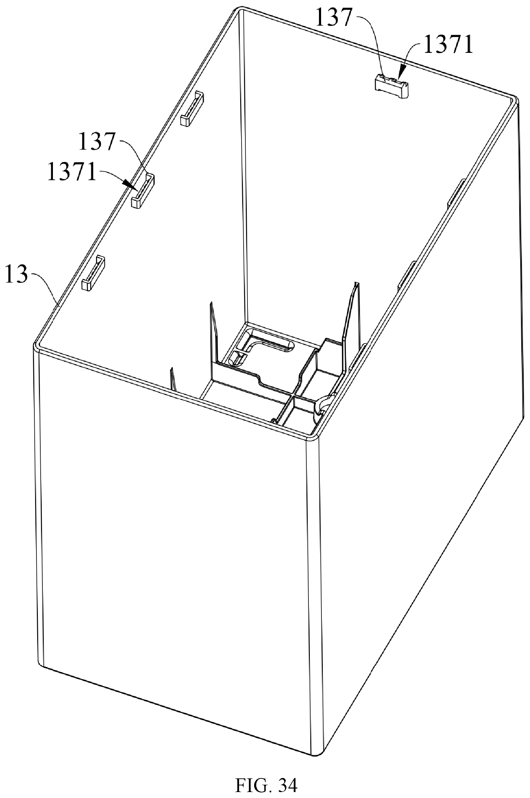

In some embodiments, as illustrated in FIG. 33 and FIG. 34, the bottom shell 13 is provided with a lug 137 at the inner side wall of the bottom shell 13. The lug 137 has an insertion groove 1371. The intermediate shell 12 is provided with an insertion block 123 at another side of the intermediate shell 12. The insertion block 123 is inserted into the insertion groove 1371 to allow for connection between the intermediate shell 12 and the bottom shell 13, to enable assembly and mounting between the intermediate shell 12 and the bottom shell 13 to be facilitated.

Further, the insertion block 123 is disposed on the second step surface 1222. The insertion block 123 is spaced apart from the first step surface 1221, and the insertion block 123 is located at a side of the locking protrusion 1223 in the circumferential direction of the intermediate shell 12. The insertion block 123 abuts against the seal 9a. This arrangement not only constrains the deformation of the seal 9a in a direction from the first step surface 1221 to the locking protrusion 1223 through cooperation between the first step surface 1221 and the locking protrusion 1223, but also constrains the deformation of the seal 9a in the direction from the first step surface 1221 to the locking protrusion 1223 through cooperation between the insertion block 123 and the first step surface 1221, which can ensure that the seal 9a primarily deforms in the direction perpendicular to the second step surface 1222, ensuring that the seal 9a can be more tightly attached to the inner side wall of the bottom shell 13, and thus improving a satisfactory sealing effect.

In some embodiments, as illustrated in FIG. 2, FIG. 25, and FIG. 31 to FIG. 33, both the first mounting flange 216 and the second mounting flange 223 are located at a narrow surface side of the battery 3. That is, both the first mounting flange 216 and the second mounting flange 223 are located at a side surface of the battery 3 in a length direction of the battery 3. In addition, the insertion block 123 includes a first insertion block 123a located at a wide surface side of the battery 3 and a second insertion block 123b located at the narrow surface side of the battery 3. That is, the first insertion block 123a is located at a side surface of the battery 3 in a width direction of the battery 3, and the second insertion block 123b is located at a side surface of the battery 3 in a length direction of the battery 3. That is, the second insertion block 123b, the first mounting flange 216, and the second mounting flange 223 are located at a same side of the battery 3. In addition, the intermediate shell 12 is provided with a plurality of first insertion blocks 123a arranged at intervals in the width direction of the battery 3 on a side of the battery 3 in the width direction of the battery 3, and the intermediate shell 12 is provided with one second insertion block 123b at a side of the battery 3 in the length direction of the battery 3. That is, more insertion blocks 123 are disposed on the wide surface side than on the narrow surface side to allow the intermediate shell 12 to bear a load from the bottom shell 13 more uniformly. In addition, the second insertion block 123b is arranged close to the first mounting flange 216, in such a manner that an insertion point between the bottom shell 13 and the intermediate shell 12 is relatively close to a connection point between the first clamping part 21 and the intermediate shell 12. Therefore, a load bearing on the intermediate shell 12 from the bottom shell 13 can match a load bearing on the intermediate shell 12 from the battery 3 and the clamping member 2 as a whole, enhancing the load-bearing capacity of the intermediate shell 12.

Exemplarily, the second insertion block 123b includes a first insertion plate 123b1 extending in the length direction of the battery 3 and a second insertion plate 123b2 connected to the first insertion plate 123b1 at an angle and extending in the width direction of the battery 3. In addition, the second insertion plate 123b2 is spaced apart from an outer circumferential surface of the first clamping part 21 to enable a threaded roddriver to extend into a gap between the second insertion plate 123b2 and the outer circumferential surface of the first clamping part 21 to tighten the first fastener or loosen the first fastener, realizing mounting, fixation, or disassembly of the first clamping part 21 and the intermediate shell 12. The second insertion plate 123b2 is inserted into an insertion groove 1371 on the lug 137. The first insertion plate 123b1 is located outside the insertion groove 1371. In addition, the lug configured to form the insertion groove 1371 engaged with the second insertion plate 123b2 has openings in communication with the insertion groove 1371 at two side surfaces of the lug in the width direction of the battery 3. In other words, the insertion groove 1371 configured to be engaged with the second insertion plate 123b2 has no groove side walls in the width direction of the battery 3. Therefore, some assembly tolerance between the intermediate shell 12 and the bottom shell 13 during mounting are allowed. That is, after ensuring that each first insertion block 123a is inserted into the insertion groove 1371 on the bottom shell 13, even if there is an assembly error, the second insertion block 123b can still be inserted into the insertion groove 1371, ensuring that the intermediate shell 12 and the bottom shell 13 can be assembled together smoothly.

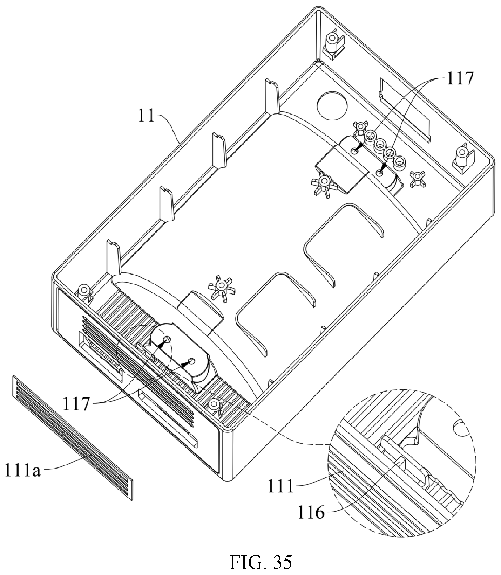

In some embodiments, as illustrated in FIG. 33 and FIG. 35, one of the intermediate shell 12 and the top shell 11 is provided with an anti-misassembly protrusion 116, while another of the intermediate shell 12 and the top shell 11 is provided with an anti-misassembly groove 124. The anti-misassembly protrusion 116 is engaged with the anti-misassembly groove 124, allowing that the intermediate shell 12 and the top shell 11 can only be mounted in a specific direction, which can provide an anti-misassembly effect for mounting between the intermediate shell 12 and the top shell 11 to prevent the intermediate shell 12 and the top shell 11 from being mounted incorrectly.

In some embodiments, as illustrated in FIG. 2, FIG. 23, and FIG. 33, the battery 3 is provided with an explosion-proof valve 31. The top shell 11 has a second vent 111 at a side wall of the top shell 11. A waterproof and breathable membrane 111a is disposed at the second vent 111. The intermediate shell 12 has an air hole 125 in communication with the second vent 111. The air hole 125 is configured to discharge gas discharged from the explosion-proof valve 31 to the second vent 111 when the explosion-proof valve 31 is activated. That is, when thermal runaway occurs in the battery 3, the explosion-proof valve 31 is activated to discharge high-temperature and high-pressure gas generated by the battery 3 to the air hole 125, which is discharged outside of the housing 1 through the waterproof and breathable membrane 111a at the second vent 111, so as to avoid explosion of the energy storage device 100 and improve the use safety of the energy storage device 100. Also, since the waterproof and breathable membrane 111a is disposed at the second vent 111, a waterproof effect can be provided without affecting explosion-proof performance of the explosion-proof valve 31, and short circuits of the battery 3 and the circuit board 7 caused by the external liquid entering the housing 1 through the second vent 111 can be avoided, ensuring the use safety and battery performance of the energy storage device 100.

It should be known that when the explosion-proof valve 31 is activated, the explosion-proof valve 31 may be opened away from the battery 3. The air hole 125 is formed in the intermediate shell 12, which not only can realize ventilation, but also can reserve a predetermined space for the explosion-proof valve 31 when the explosion-proof valve 31 is activated to accommodate a part of explosion-proof valve 31 after explosion, to prevent the explosion-proof valve 31 after explosion from impacting other parts to protect other parts.

In addition, since the second vent 111 is disposed at the side wall of the housing 1, when the grip member 9 is held to lift the energy storage device 100, hot gas discharged through the second vent 111 can be prevented from coming into contact with the user's hand, preventing the user's hand from being burned or wetted.

In some embodiments, the circuit board 7 is disposed inside the bottom shell 13 and located at a side of the battery 3. The intermediate shell 12 has a mounting through hole 126 in which a fan 72 is mounted. A projection of a circumferential edge of the mounting through hole 126 on an inner bottom wall of the bottom shell 13 is a third projection ring. A projection of the circuit board 7 on the inner bottom wall of the bottom shell 13 is a fourth projection. The fourth projection is partially located within the third projection ring, ensuring that when the fan 72 is mounted in the mounting through hole 126, the fan 72 can cause the gas around the circuit board 7 to flow to cool the circuit board 7.

In some embodiments, as illustrated in FIG. 2, FIG. 31, FIG. 32, and FIG. 33, the energy storage device 100 further includes an electrical connection member 9b electrically connected to the battery 3 and the circuit board 7 to allow for electrical connection between the battery 3 and the circuit board 7. In addition, the intermediate shell 12 has an avoidance groove 127 configured to avoid the electrical connection member 9b to avoid interference between the intermediate shell 12 and the electrical connection member 9b to ensure that each component can be assembled together. Also, the electrical connection member 9b can also be limited.

For example, the electrical connection member 9b may be a copper connection piece, an aluminum connection piece, an electrical connection wire, or the like.

During discharging, current output by the battery 3 is transmitted to the circuit board 7 by the electrical connection member 9b, then transmitted to the power socket 114 via the bundles of wires, and finally transmitted to the to-be-charged device to realize discharging of the battery 3. During charging, external current is transmitted to the circuit board 7 by the power socket 114 and the bundles of wires, and then transmitted to the battery 3 by the electrical connection member 9b to realize charging of the battery 3.

### Second Embodiment

According to the research, the energy storage device in the related art usually includes a plurality of batteries connected in series to form a battery pack, which is disposed in a box, and is packaged as an energy storage device. However, the battery may expand during charging and discharging, which may cause performance of the battery itself to attenuate, increase safety hazards, and reduce use performance of the energy storage device. In addition, expansion of the battery may squeeze the circuit board to cause damage to electronic components on the circuit board, affecting use of the energy storage device.

Based on this, an embodiment of the present disclosure provides an energy storage device capable of avoiding influence on the circuit board when a battery expands. In an exemplary embodiment of the present disclosure, as illustrated in FIG. 1 to FIG. 35, the energy storage device 100 according to an embodiment of the present disclosure includes the housing 1, the clamping member 2, the battery 3, the motherboard mounting member 6, and the circuit board 7. The clamping member 2 is disposed inside the housing 1, and the clamping member 2 has the clamping space 23. The battery 3 is disposed in the clamping space 23. The motherboard mounting member 6 is disposed inside the housing 1 and connected to the clamping member 2. The motherboard mounting member 6 is located at a side of the battery 3. The circuit board 7 is disposed inside the housing 1 and mounted at the motherboard mounting member 6. The circuit board 7 is electrically connected to the battery 3, and a spacing is formed between the circuit board 7 and the first clamping part 21 to provide a space for expansion of the battery 3 to prevent the circuit board 7 from being squeezed during expansion of the battery 3 to protect the circuit board 7.

By providing the clamping member 2 and disposing the battery 3 in the clamping space 23 of the clamping member 2, the clamping member 2 can be used to clamp the battery 3 to reduce expansion and reduce compression on the circuit board 7. On this basis, in the present disclosure, the circuit board 7 is mounted at the clamping member 2 by the motherboard mounting member 6, in such a manner that a spacing can exist between the circuit board 7 and the clamping member 2 through mounting and supporting the circuit board 7 by the motherboard mounting member 6. In this way, the spacing can be used to provide an expansion space for the battery 3 to prevent the battery 3 from squeezing the circuit board 7 when the battery 3 expands to provide better protection for the circuit board 7.

For detailed descriptions of components such as the housing 1, the clamping member 2, the battery 3, the motherboard mounting member 6, and the circuit board 7 in this embodiment, reference can be made to the description of the same in the first embodiment, and thus details thereof will be omitted here. Moreover, the energy storage device 100 in this embodiment further includes the adjustment member 4, the strap 5, the heat dissipation fin 7a, the heat insulating member 8, the grip member 9, the seal 9a, and the electrical connection member 9b. For detailed description of the adjustment member 4, the strap 5, the heat dissipation fin 7a, the heat insulating member 8, the seal 9a, and the electrical connection member 9b, reference can be made to the description of the same in the first embodiment, and thus details thereof will be omitted here.

### Third Embodiment

Through research, it was found that the energy storage device in the related art usually includes a housing and a battery disposed in the housing. The housing usually includes a top shell and a bottom shell connected to the top shell. An accommodation space configured to accommodate the battery is formed between the top shell and the bottom shell. The battery is accommodated in the accommodation space and is usually connected to the top shell by a battery mounting member. However, in this case the top shell can be subjected to a large force from the battery to easily damage the top shell, and thus affect use of the housing.

Based on this, an embodiment of the present disclosure provides an energy storage device capable of improving service life of the housing. In an exemplary embodiment of the present disclosure, as illustrated in FIG. 1 to FIG. 35, the energy storage device 100 according to the embodiment of the present disclosure includes a housing 1, a clamping member 2, and a battery 3. The housing 1 includes a top shell 11, an intermediate shell 12, and a bottom shell 13. The intermediate shell 12 is located between the top shell 11 and the bottom shell 13. In addition, the intermediate shell 12 is connected to the top shell 11 and the bottom shell 13. The clamping member 2 is disposed inside the bottom shell 13, and the clamping member 2 is connected to the intermediate shell 12. The clamping member 2 has a clamping space 23. The battery 3 is disposed in the clamping space 23.

By designing the housing1 as a housing structure including the top shell 11, the intermediate shell 12 and the bottom shell 13, and providing the clamping member 2 for clamping the battery 3, not only the battery 3 can be clamped by the clamping member 2 to reduce expansion of the battery 3, but also connection between the battery 3 and the intermediate shell 12 can be realized by the clamping member 2. Compared to a design where the housing 1 includes only the top shell 11 and the bottom shell 13, this design adds the intermediate shell 12 connected to the top shell 11, and ensures that the clamping member 2 and the bottom shell 13 are connected to the intermediate shell 12. Therefore, the intermediate shell 12 can be used to bear part of forces from the top shell. That is, the intermediate shell 12 can be used to bear part of forces exerted by the clamping member 2, the battery 3, and the bottom shell 13 to avoid all the weight being applied to the top shell 11 and cause damage to the top shell 11, increasing structural strength of the top shell 11 to enhance a load-bearing capacity of the top shell 11 when the energy storage device 100 is lifted. In this way, service life of the top shell 11 can be prolonged, and the service life of the housing 1 can also be prolonged.

For detailed descriptions of components such as the top housing 11, the intermediate shell 12, the bottom shell 13, the clamping member 2, and the battery 3 in this embodiment, reference can be made to the description thereof in the first embodiment, and thus details thereof will be omitted here. In addition, the energy storage device 100 further includes the adjustment member 4, the strap 5, the motherboard mounting member 6, the circuit board 7, the heat dissipation fin 7a, the heat insulating member 8, a seal 9a, and the electrical connection member 9b. For specific descriptions of the clamping member 2, the battery 3, the adjustment member 4, the strap 5, the motherboard mounting member 6, the circuit board 7, the heat dissipation fin 7a, the heat insulating member 8, the grip member 9, the seal 9a, and the electrical connection member 9b in this embodiment, reference can be made to the description thereof in the first embodiment, and thus details thereof will be omitted here.

### Fourth Embodiment

The energy storage device in the related art generally includes the housing and the battery disposed in the housing. The housing generally includes the top shell and the bottom shell connected to the top shell. The accommodation space for accommodating the battery is formed between the top shell and the bottom shell. The battery is accommodated in the accommodation space. However, a connection between the top shell and the bottom shell has poor sealing, and thus external liquid easily enters the housing from the connection between the top shell and the bottom shell, which may affect the use of the battery disposed in the housing.

Based on this, this embodiment provides a housing assembly having high waterproof performance. In an exemplary embodiment of the present disclosure, as illustrated in FIG. 1 to FIG. 35, the housing assembly 100a includes the top shell 11 and a bottom shell assembly. The bottom shell assembly is provided with a stop protrusion 121 at an outer peripheral surface of the bottom shell assembly. The stop protrusion 121 is arranged around the bottom shell assembly in a circumferential direction of the bottom shell assembly, and has a first stop surface 1211 facing towards the top surface of the top shell 11. The bottom shell assembly is embedded in the top shell 11, and the first stop surface 1211 abuts against the end face of the top shell 11. The bottom shell assembly includes the intermediate shell 12 and the bottom shell 13.

It should be understood that a state when the bottom surface of the bottom shell assembly is in contact with the placement surface can be understood as a state in which the housing assembly 100a is placed right up on the placement surface (a state as illustrated in FIG. 19, in which the housing assembly 100a is placed right up on the placement surface), and a state when the top surface of the top shell 11 is in contact with the placement surface can be understood as a state in which the housing assembly 100a is placed upside down on the placement surface (a state as illustrated in FIG. 23, in which the housing assembly 100a is placed upside down on the placement surface). Normally, when the housing assembly 100a is placed on the placement surface, the housing assembly 100a is placed right up on the placement surface. That is, the bottom surface of the bottom shell assembly is in contact with the placement surface. Therefore, liquid on the housing assembly 100a generally flows from top to bottom. For example, on a rainy day, when the rainwater falls and drips to the housing, the rainwater on the top shell 11 usually flows from top to bottom under the action of gravity. Even if the rainwater flows to the gap between the top shell 11 and the first stop surface 1211, and since the bottom shell assembly is embedded in the top shell 11, a part of the bottom shell assembly located in the top shell 11 forms an upward barrier, rainwater cannot flow upwards along the part of the bottom shell assembly embedded in the top shell 11 under the action of gravity, achieving a waterproof design. Therefore, with the stop protrusion 121 protruding from the outer peripheral surface of the bottom shell assembly and the bottom shell assembly embedded in the top housing 11, and the first stop surface 1211 of the stop protrusion 121 abutting against the end face of the top housing 11, the waterproof design of the housing 1 can be realized, the waterproof performance of the housing assembly 100a can be improved, and a probability of short-circuit to battery caused by external liquid entering the housing can be reduced.

For detailed descriptions of components such as the top shell 11, the intermediate shell 12, and the bottom shell 13 in this embodiment, reference can be made to the description thereof in the first embodiment, and thus details thereof will be omitted here.

In addition, the present disclosure further provides the energy storage device having the housing assembly as described above. In addition, the energy storage device 100 further includes the clamping member 2, the battery 3, the adjustment member 4, the strap 5, the motherboard mounting member 6, the circuit board 7, a heat dissipation fin 7a, the heat insulating member 8, the seal 9a, and the electrical connection member 9b. For details thereof, reference can be made to the description thereof in the first embodiment, and thus details thereof will be omitted here.

### Fifth Embodiment

Through research, it was found that handles in the related art protrude from the top surface of the housing to enable the housing not to be laid upside down. That is, the top surface of the housing cannot be laid flat on the placement surface. Although in the related art, the housing can be placed upside down by disposing a groove on the top surface of the housing and making the handle rotatably arranged in the groove. In particular, when the housing needs to be lifted, the handle needs to be rotated out of the groove to be gripped, and thus the housing can be lifted by holding the handle. When the housing does not need to be lifted, the handle can be rotated to be located in the groove, and in this case the housing can be laid upside down. A rotation design of the handle causes serious wear of a rotating shaft and a shaft hole after multiple rotations, which affects use.

Based on this, the present disclosure provides a housing assembly that can be placed upside down. In particular, as illustrated in FIG. 1 to FIG. 35, the housing assembly 100a includes the housing 1 and the grip member 9 connected to the housing 1 to hold the grip member 9 and lift the energy storage device 100 to move the energy storage device 100 when the energy storage device 100 is moved, in such a manner that the energy storage device 100 can be more conveniently moved. In addition, the housing 1 has the first groove 112 on the top surface of the housing 1. The grip member 9 is at least partially accommodated in the first groove 112, and the grip space is formed between the grip member 9 and the first groove 112 for the user's hand to reach to hold the grip member 9. In a direction opposite to the depth direction of the first groove 112, the surface of the grip member 9 facing away from the housing 1 is lower than or flush with the top surface of the housing 1. Therefore, when the housing 1 is placed on the placement surface such as a desk, a table, or a floor, the housing 1 can be placed upside down, meaning that the top surface of the top shell 11 can be placed on the placement surface, allowing the energy storage device 100 to be placed upside down on the placement surface. Therefore, the present disclosure can realize an upside-down design of the housing 1 without designing the rotatable grip member 9, and can solve a problem that the service life of the grip member 9 is short due to serious wear of the rotating shaft and the shaft hole after multiple rotations. In addition, the housing assembly 100a has a relatively simple overall structure and a low cost.

For detailed descriptions of components such as the housing 1 and the grip member 9 in this embodiment, reference can be made to the description of the same in the first embodiment, and thus details thereof will be omitted here.

In addition, the present disclosure further provides the energy storage device having the housing assembly as described above. In addition, the energy storage device 100 further includes the clamping member 2, the battery 3, the adjustment member 4, the strap 5, the motherboard mounting member 6, the circuit board 7, the heat dissipation fin 7a, the heat insulating member 8, the seal 9a, and the electrical connection member 9b. For details thereof in this embodiment, reference can be made to the description thereof in the first embodiment, and thus details thereof will be omitted here.

### Sixth Embodiment

The embodiments of the present disclosure provide an energy storage system including the energy storage device according to any one of the foregoing first to fifth embodiments. It should be understood that the energy storage system having the energy storage device described above can bring the same or similar advantageous effects as the energy storage device, which is illustrated in the descriptions of the embodiments of the energy storage device, and thus details thereof will be omitted here.

In practical applications, the energy storage system can be a portable energy storage system, and can be conveniently moved to a target position as desired.

Technical features in the above embodiments can be combined arbitrarily. For the sake of concise description, not all possible combinations of the technical features in the above embodiments are described. However, as long as there is no conflict between the technical features, any combination of technical features in the above embodiments should be considered as falling within the scope of the present disclosure.

In addition, while several embodiments of the present disclosure have been described above in a specific and detailed manner, the protection scope of the present disclosure cannot be construed as being limited to these embodiments. It should be noted that, those skilled in the art can make various variants and improvements without departing from the concept of the present disclosure, and these variants and improvements shall fall within the protection scope of the present disclosure as defined by the claims as appended. Therefore, contents of the present disclosure should not be construed as limiting the present disclosure, and the scope of protection of the present disclosure should be based on the appended claims.

## Claims

1. An energy storage device, comprising:
a housing;
a clamping member disposed inside the housing, the clamping member comprising a first clamping part and a second clamping part connected to the first clamping part, and a clamping space being formed between the first clamping part and the second clamping part;
a battery disposed in the clamping space; and
an adjustment member located inside the housing, the first clamping part and the second clamping part being connected to each other through the adjustment member, and the adjustment member being configured to adjust a size of the clamping space to adjust a clamping degree of the first clamping part and the second clamping part on the battery.

2. The energy storage device according to claim 1, wherein:
the first clamping part comprises a first clamping body and a first flange connected to the first clamping body, and the second clamping part comprises a second clamping body and a second flange connected to the second clamping body, the first clamping body and the second clamping body being connected by connecting the first flange and the second flange through the adjustment member, wherein the clamping space is formed between the first clamping body and the second clamping body, both the first flange and the second flange being located outside the clamping space;
the adjustment member comprises a first slot formed in the first flange and a first bending part disposed at the second flange, the first bending part passing through the first slot, the first bending part having a bent portion protruding from a surface of the first flange facing away from the second flange by a variable length, the bent portion being bendable to abut against the first flange; and/or
the adjustment member is a threaded member, the adjustment member being configured to change a distance between the first flange and the second flange upon rotation of the adjustment member.

3. The energy storage device according to claim 2, wherein when the adjustment member is the threaded member:
the first flange has a first connection hole, the second flange has a threaded hole, and the adjustment member comprises a threaded rod and a head having a greater diameter than the threaded rod, the threaded rod passing through the first connection hole and the threaded hole, an end of the threaded rod being threadedly connected to the threaded hole, and the head being connected to another end of the threaded rod and abutting against the surface of the first flange facing away from the second flange; or
the first flange has a first connection hole, the second flange has a second connection hole, and the adjustment member comprises a threaded component and a nut, the threaded component comprising a threaded rod and a head having a greater diameter than the threaded rod, the threaded rod passing through the first connection hole and the second connection hole, the head being connected to an end of the threaded rod and abutting against the surface of the first flange facing away from the second flange, and the nut being threadedly connected to a periphery of another end of the threaded rod and abutting against a surface of the second flange facing away from the first flange.

4. The energy storage device according to claim 2, wherein:
the first clamping part further comprises a first reinforcing rib connected to the first flange and the first clamping body; and/or
the second clamping part further comprises a second reinforcing rib connected to the second flange and the second clamping body.

5. The energy storage device according to claim 2, wherein:
the first flange further has a first avoidance hole, and the second flange further has a second avoidance hole, a projection of a circumferential edge of the second avoidance hole on the first flange coinciding with a circumferential edge of the first avoidance hole; and
the energy storage device further comprises a strap arranged around a periphery of the first clamping body and a periphery of the second clamping body, the strap passing through the first avoidance hole and the second avoidance hole,
wherein the first clamping body has a connecting surface configured to be connected to the first flange, and the first avoidance hole has a hole wall surface coplanar with the connecting surface, enabling the strap to abut against the connecting surface and the hole wall surface when the strap passes through the first avoidance hole and the second avoidance hole.

6. The energy storage device according to claim 5, wherein when the adjustment member comprises the first slot and the first bending part, the first avoidance hole is located between the first slot and the first clamping body, and a projection of the first avoidance hole on the first clamping body at least partially overlaps with a projection of the first slot on the first clamping body.

7. The energy storage device according to claim 1, further comprising a strap arranged around a periphery of the first clamping part and a periphery of the second clamping part.

8. The energy storage device according to claim 7, wherein the first clamping part and/or the second clamping part is provided with a plurality of first protrusions arranged at intervals and protruding from an outer side surface of the first clamping part and/or the second clamping part, any two adjacent first protrusions of the plurality of first protrusions being located at two opposite sides of the strap, respectively.

9. The energy storage device according to claim 1, wherein the first clamping part and/or the second clamping part is provided with a second protrusion protruding from an inner side surface of the first clamping part and/or the second clamping part, the second protrusion abutting against the battery, and the second protrusion being deformable when subjected to a force.

10. The energy storage device according to claim 1, wherein the first clamping part and the second clamping part are each made of metal.

11. The energy storage device according to claim 1, wherein the housing is provided with a first side rib protruding from an inner side wall of the housing, the first side rib abutting against the first clamping part and/or the second clamping part.

12. The energy storage device according to claim 11, wherein the first side rib has a first guide surface configured to guide the clamping member to be mounted at a predetermined position in the housing.

13. The energy storage device according to claim 11, wherein:
a plurality of first side ribs is provided, the plurality of first side ribs being arranged at intervals in a circumferential direction of the housing; and
the inner side wall of the housing comprises a first side wall facing towards a side surface of the battery and a second side wall facing towards a wide surface of the battery, the second side wall being provided with a stop plate protruding from the second side wall, the stop plate being connected to at least one of the plurality of first side ribs disposed at the first side wall, the stop plate being spaced apart from the first side wall, and the stop plate abutting against the first clamping part and/or the second clamping part.

14. The energy storage device according to claim 1, wherein:
the battery is a single one; and
the energy storage device has energy greater than or equal to 1 KWH.

15. The energy storage device according to claim 1, wherein:
the battery is a single one; and
the energy storage device further comprises a motherboard mounting member and a circuit board that are disposed inside the housing, the motherboard mounting member being connected to the first clamping part and located at a side of the battery, the circuit board being mounted at the motherboard mounting member, a spacing being formed between the circuit board and the first clamping part, and the circuit board being electrically connected to the battery.

16. The energy storage device according to claim 15, wherein the motherboard mounting member is a housing structure having a cavity, the circuit board being mounted in the cavity of the motherboard mounting member.

17. The energy storage device according to claim 16, wherein the first clamping part is provided with a protruding column at a middle part of the first clamping part, and the circuit board has a first through hole, the protruding column passing through the first through hole and being connected to the motherboard mounting member.

18. The energy storage device according to claim 17, wherein the motherboard mounting member is provided with a sleeve structure located in the cavity, the protruding column passing through a hollow portion of the sleeve structure.

19. The energy storage device according to claim 16, wherein the motherboard mounting member is provided with a first step structure at an edge of the motherboard mounting member, the first step structure extending along a peripheral edge of the motherboard mounting member, the first step structure being arranged around an outer periphery of the first clamping part, and the first step structure abutting against a top of the battery.

20. The energy storage device according to claim 16, wherein:
the motherboard mounting member has an engagement groove at an edge of the motherboard mounting member; and
the first clamping part is provided with a protruding bar at a surface of the first clamping part facing towards the motherboard mounting member, the protruding bar extending towards the motherboard mounting member, and the protruding bar being inserted into the engagement groove.

21. The energy storage device according to claim 16, wherein the motherboard mounting member has a wiring groove at an outer surface of the motherboard mounting member, a separating protrusion being disposed in the wiring groove and configured to divide the wiring groove into a plurality of wiring sub-grooves, the plurality of wiring sub-grooves being configured to separate bundles of wires electrically connected to the circuit board.

22. The energy storage device according to claim 16, wherein:
the housing is provided with a second side rib protruding from an inner side wall of the housing, the second side rib abutting against the motherboard mounting member; and
the housing is provided with a bottom rib protruding from an inner bottom wall of the housing, a partition being disposed between the bottom rib and the second side rib, and the partition being connected to the inner bottom wall of the housing and abutting against the motherboard mounting member.

23. The energy storage device according to claim 16, wherein:
the motherboard mounting member has a first vent and a heat dissipation hole in communication with the first vent;
the housing has a second vent in communication with the first vent and the heat dissipation hole; and
the circuit board is provided with a fan and electronic components, the fan being configured to form a thermal convection through the first vent, the heat dissipation hole, and the second vent for heat dissipation for the electronic components.

24. The energy storage device according to claim 23, wherein:
the first vent is arranged adjacent to a top of the battery;
the heat dissipation hole comprises a first sub-heat dissipation hole arranged adjacent to a bottom of the battery;
the fan is arranged adjacent to the top of the battery;
a first gap is formed between the motherboard mounting member and an inner side wall of the housing, the first gap being in communication with the second vent;
a second gap is formed between the motherboard mounting member and an inner bottom wall of the housing, the second gap being in communication with the first gap and the first sub-heat dissipation hole;
the housing is provided with a second side rib located in the first gap and protruding from the inner side wall of the housing, the second side rib abutting against the motherboard mounting member; and
the housing is provided with a bottom rib protruding from the inner bottom wall of the housing, a partition being disposed between the bottom rib and the second side rib, the partition being connected to the inner bottom wall of the housing and abutting against the motherboard mounting member, a third gap being formed between the partition and the inner side wall of the housing, and at least one end of the bottom rib being spaced apart from the inner side wall of the housing.

25. The energy storage device according to claim 24, wherein the partition comprises a first side surface facing away from the inner bottom wall and an inclined surface connected to the first side surface, the inclined surface being gradually inclined towards the bottom rib from a connection between the inclined surface and the first side surface in a direction from the first side surface to the inner bottom wall.

26. The energy storage device according to claim 23, wherein:
the electronic components comprise a first functional component having a temperature higher than or equal to 110°C in an operating state, the fan having an air outlet facing towards the first functional component; and
the energy storage device further comprises a heat dissipation fin, the heat dissipation fin being disposed at a side of the first functional component facing away from the first clamping part, and the heat dissipation fin extending in an axial direction of the fan.

27. The energy storage device according to claim 23, wherein:
the heat dissipation hole comprises a second sub-heat dissipation hole, a projection of a circumferential edge of the second sub-heat dissipation hole on an inner side wall of the housing is a first projection ring; and
the electronic components comprise a first functional component having a temperature higher than or equal to 110°C in an operating state, a projection of the first functional component on the inner side wall of the housing being a first projection, the first projection being at least partially located within the first projection ring.

28. The energy storage device according to claim 23, wherein a waterproof and breathable membrane is disposed at the second vent.

29. The energy storage device according to claim 15, further comprising a heat insulating member disposed between the circuit board and the first clamping part.

30. The energy storage device according to claim 29, wherein:
the heat insulating member has a second slot at a peripheral edge of the heat insulating member; and
the first clamping part is provided with a second bending part protruding from the first clamping part, the second bending part passing through the second slot, and the second bending part being bendable to abut against the heat insulating member.

31. The energy storage device according to claim 1, wherein:
the housing has a first groove formed at a top surface of the housing; and
the energy storage device further comprises a grip member connected to the housing, the grip member being at least partially accommodated in the first groove, a grip space being formed between the grip member and the first groove and configured to allow a user's hand to access and hold the grip member, and in a direction opposite to a depth direction of the first groove, a surface of the grip member facing away from the housing being lower than or flush with the top surface of the housing.

32. The energy storage device according to claim 31, wherein the surface of the grip member facing away from the housing is planar.

33. The energy storage device according to claim 31, wherein the housing is provided with an annular protrusion at the top surface of the housing, the annular protrusion being arranged around an outer periphery of the first groove, and in a protruding direction of the annular protrusion, the surface of the grip member facing away from the housing being lower than a surface of the annular protrusion facing away from the housing.

34. The energy storage device according to claim 31, wherein:
two ends of the grip member in a first direction of the grip member are connected to the housing;
the first groove is an arc-shaped groove extending in the first direction of the grip member;
the first groove has a groove wall surface facing towards the grip member, the groove wall surface being a cylindrical surface arranged around an axis parallel to the first direction, and a cross-section of the groove wall surface taken along a plane perpendicular to the first direction has an arc-shaped profile.

35. The energy storage device according to claim 34, wherein the grip member has a circumferential side surface facing towards the groove wall surface, the circumferential side surface being a cylindrical surface arranged around the axis parallel to the first direction, and the circumferential side surface being parallel to the groove wall surface.

36. The energy storage device according to claim 35, wherein the grip member is provided with a plurality of first ribs and a plurality of second ribs at a surface of the grip member facing towards the groove wall surface, the plurality of first ribs being arranged at intervals in the first direction, the plurality of second ribs being arranged at intervals in a second direction perpendicular to the first direction, and each of the plurality of second ribs being arranged to intersect with the plurality of first ribs, wherein:
the circumferential side surface is formed by surfaces of the plurality of first ribs facing towards the groove wall surface; and/or
the circumferential side surface is formed by surfaces of the plurality of second ribs facing towards the groove wall surface.

37. The energy storage device according to claim 31, wherein:
two ends of the grip member in a first direction of the grip member are connected to the housing; and
the housing is provided with a power socket at a side wall of the housing arranged in the first direction, a projection of the grip member on the side wall of the housing arranged in the first direction being a second projection, and the second projection at least partially overlapping with the power socket in the depth direction of the first groove.

38. The energy storage device according to claim 37, wherein:
the power socket is located at a top of the housing; and/or
in the depth direction of the first groove, a distance between the power socket and the top surface of the housing is d1, and a distance between the top surface of the housing and a bottom surface of the housing is d2, where d1/d2 ranges from 1/25 to 4/25.

39. The energy storage device according to claim 31, wherein the housing is provided with an annular protrusion and a second functional component at the top surface of the housing, the annular protrusion being arranged around an outer periphery of the first groove, the second functional component being located inside the annular protrusion, and in a protruding direction of the annular protrusion, a surface of the second functional component facing away from the housing being lower than a surface of the annular protrusion facing away from the housing.

40. The energy storage device according to claim 1, wherein:
the housing is provided with an annular protrusion at a top surface of the housing, a projection of the annular protrusion on a bottom surface of the housing being a second projection ring; and
the housing is provided with a limit protrusion at the bottom surface of the housing, a projection of the limit protrusion on the bottom surface of the housing being a third projection, the third projection being located inside the second projection ring, and the third projection having an outer contour abutting against an inner contour of the second projection ring.

41. The energy storage device according to claim 1, wherein the housing comprises:
a top shell, the first clamping part and the second clamping part being connected to the top shell; and
a bottom shell connected to the top shell, the first clamping part and the second clamping part being disposed inside the bottom shell, and the adjustment member being disposed inside the bottom shell.

42. The energy storage device according to claim 1, wherein the housing comprises:
a top shell;
a bottom shell, the first clamping part and the second clamping part being disposed inside the bottom shell, and the adjustment member being located in the bottom shell; and
an intermediate shell located between the top shell and the bottom shell, the intermediate shell being connected to the top shell and the bottom shell, the first clamping part and the second clamping part being connected to the intermediate shell.

43. The energy storage device according to claim 42, wherein:
the intermediate shell is provided with a stop protrusion protruding from an outer circumferential surface of the intermediate shell, the stop protrusion being arranged around the intermediate shell in a circumferential direction of the intermediate shell, and the stop protrusion having a first stop surface facing towards a top surface of the top shell;
the intermediate shell is embedded inside the top shell, the stop protrusion being located outside the top shell, and the first stop surface abutting against an end face of the top shell; and
in a direction perpendicular to the first stop surface, a part of the intermediate shell embedded inside the top shell has a length ranging from 0.3 cm to 1.5 cm.

44. The energy storage device according to claim 42, wherein the intermediate shell is provided with a stop protrusion protruding from an outer circumferential surface of the intermediate shell, the stop protrusion being arranged around the intermediate shell in a circumferential direction of the intermediate shell, and the bottom shell being embedded in the stop protrusion and/or in the intermediate shell.

45. The energy storage device according to claim 42, wherein:
the intermediate shell is provided with a stop protrusion protruding from an outer circumferential surface of the intermediate shell, the stop protrusion being arranged around the intermediate shell in a circumferential direction of the intermediate shell, and the stop protrusion having a second stop surface facing towards a bottom surface of the bottom shell;
the intermediate shell is embedded inside the bottom shell, the stop protrusion being located outside the bottom shell, and the second stop surface abutting against an end face of the bottom shell; and
the energy storage device further comprises a seal disposed at the outer circumferential surface of the intermediate shell and arranged around the intermediate shell in the circumferential direction of the intermediate shell, the seal being sealingly abutting against an inner side wall of the bottom shell.

46. The energy storage device according to claim 45, wherein the intermediate shell is provided with a second step structure at an end of the intermediate shell embedded inside the bottom shell, the second step structure comprising a first step surface and a second step surface that are connected to each other at an angle, wherein:
the first step surface has a same orientation as the second stop surface;
the second step surface has a same orientation as the outer circumferential surface of the intermediate shell; and
the second step surface is provided with a plurality of locking protrusions arranged at intervals in the circumferential direction of the intermediate shell, the plurality of the locking protrusions being spaced apart from the first step surface, and the seal being embedded between the first step surface and the plurality of locking protrusions.

47. The energy storage device according to claim 42, wherein:
the intermediate shell has an end embedded inside the top shell and another end embedded inside the bottom shell;
the intermediate shell is provided with a stop protrusion protruding from an outer circumferential surface of the intermediate shell, the stop protrusion being arranged around the intermediate shell in a circumferential direction of the intermediate shell, and the stop protrusion being located between the top shell and the bottom shell; and
in a protruding direction of the stop protrusion, an outer circumferential surface of the top shell is flush with an outer circumferential surface of the bottom shell, and the outer circumferential surface of the intermediate shell is lower than the outer circumferential surface of the top shell.

48. The energy storage device according to claim 42, wherein:
the battery is provided with an explosion-proof valve;
the top shell has a second vent at a side wall of the top shell, a waterproof and breathable membrane being disposed at the second vent; and
the intermediate shell has an air hole in communication with the second vent, the air hole being configured to discharge gas discharged from the explosion-proof valve to the second vent when the explosion-proof valve is activated.

49. The energy storage device according to claim 42, further comprising a circuit board disposed inside the bottom shell and located at a side of the battery, wherein the intermediate shell has a mounting through hole in which a fan is mounted, a projection of a circumferential edge of the mounting through hole on an inner bottom wall of the bottom shell being a third projection ring, a projection of the circuit board on the inner bottom wall of the bottom shell being a fourth projection, the fourth projection being partially located within the third projection ring.

50. The energy storage device according to claim 42, further comprising:
a circuit board disposed inside the bottom shell and located at a side of the battery; and
an electrical connection member electrically connected to the battery and the circuit board, the intermediate shell having an avoidance groove configured to avoid the electrical connection member.

51. An energy storage system, comprising the energy storage device according to any one of claims 1 to 50.
